# EUROPÄISCHE PATENTANMELDUNG

(11) **EP 3 715 397 A1**
(43) Veröffentlichungstag der Anmeldung: **30.09.2020**
(21) Anmeldenummer: 19191330.0
(22) Anmeldetag: 12.08.2019
(51) Int. Cl.: C08G 18/10, C08G 18/16, C08G 18/18, C08G 18/20, C08G 18/24, C08G 18/28, C08G 18/42, C08G 18/48, C08G 18/71, C08G 18/75, C08G 18/76, C08G 18/79, C09J 175/08, C08G 101/00

(54) **ZUSAMMENSETZUNG UND VERFAHREN ZUR HERSTELLUNG FEUCHTIGKEITSVERNETZENDER POLYMERE UND DEREN VERWENDUNG**

(30) Priorität: 26.03.2019 EP 19165363
(71) Anmelder: PolyU GmbH, 45141 Essen (DE)
(72) Erfinder: LANGERBEINS, Klaus, 45141 Essen (DE); SENZLOBER, Michael, 45141 Essen (DE)
(74) Vertreter: von Renesse, Dorothea

(57) **Zusammenfassung**

Die Erfindung bezieht sich auf eine Zusammensetzung und ein Verfahren zur Herstellung feuchtigkeitsvernetzender Polymere unter Katalyse mindestens einer Metall-Siloxan-Silanol(-at)-Verbindung, und die Verwendung der Zusammensetzung im CASE-Bereich (Beschichtungen, Klebstoffe, Dichtungen und Elastomere), insbesondere im Bereich von Kleb- und Dichtstoffen.

## Beschreibung

Die vorliegende Erfindung betrifft Zusammensetzungen mit feuchtigkeitsvernetzenden Polymeren und Verfahren zur deren Herstellung, insbesondere von Silan-funktionellen Hybridpolymeren, sowie die feuchtigkeitsvernetzenden Polymere als solche. In einem weiteren Aspekt betrifft die vorliegende Erfindung die Verwendung dieser Zusammensetzungen in CASE-Bereichen (Beschichtungen, Klebstoffe, Dichtungen und Elastomere), wie beispielsweise in Kleb- und Dichtstoffen.

Polymere, wie zum Beispiel silylierte Polyurethane, die bei Kontakt mit Wasser oder Luftfeuchtigkeit und bei Raumtemperatur kondensieren ("vernetzen"), sind schon lange bekannt. Sie werden auch als feuchtigkeitsvernetzende Polymere bezeichnet. Unter anderem in Abhängigkeit vom Gehalt der Silangruppen und deren Aufbau können sich langkettige Polymere, weitmaschige dreidimensionale Netzwerke oder hochvernetzte Systeme bilden.

Feuchtigkeitsvernetzende Polymere, insbesondere silylierte Polymerurethane, finden schon lange als Kleb- und Dichtstoffe vielfältige Anwendungen. So entwickelte sich der Bereich der traditionellen Silikon-Kleb- und Dichtstoffe auf Basis von Dimethylpolysiloxanen und der Polyurethan-Kleb- und Dichtstoffe mit freien Isocyanatgruppen hin zu Silanterminierten-Kleb- und Dichtstoffen.

Typischerweise werden Methoxy-substituierte Silane verwendet. Die Verwendung dieser Verbindungen hat sich allgemein etabliert, da diese eine gute Reaktivität aufweisen. Methoxysilan-substituierte Polymere haben jedoch den Nachteil, dass sie bei der Aushärtung Anwendung Methanol abspalten. Dies ist toxikologisch bedenklich ist.

Aufgabe der Erfindung ist daher, diesbezüglich eine Verbesserung zu erreichen.

Erfindungsgemäß wird die Aufgabe gelöst durch die Bereitstellung einer Zusammensetzung erhältlich nach Anspruch 1. Vorteilhafte Weiterentwicklungen sind Gegenstand der Unteransprüche oder der nebengeordneten Ansprüche.

Der Kern der Erfindung besteht demnach darin, eine Zusammensetzung mit mindestens zwei Katalysatoren A und B sowie mindestens einem silyliertes Polymer (SiP) bereitzustellen, wobei der Katalysator A aus der Gruppe der Metall-Siloxan-Silanol(-at)-Verbindungen ausgewählt ist. Bevorzugt ist das silylierte Polymer (SiP) hergestellt aus einer Metall-Siloxan-Silanol(-at)-Verbindung katalysierten Synthese von mindestens einem hydroxyfunktionalisierten Polymer (auch "hydroxyfunktionelles Polymer"), und einer mindestens eine Isocyanat-Gruppen aufweisenden Verbindung

Überraschenderweise wurde gefunden, dass die Zusammensetzung nach Anspruch 1 die Verwendung von Ethoxy-substituierten Silanen erlaubt. Bei der Aushärtung der SiP wird demnach nicht Methanol, sondern das toxikologisch unbedenkliche Ethanol abgespalten. Bei der Aushärtung der Polymere können akzeptable Fadenziehzeiten und Klebfreizeiten erreicht werden (ähnlich wie die bei den Methoxy-funktionellen Hybridpolymeren; ).

Die Erfindung erlaubt es daher Formulierungen beispielsweise für den Bereich Kleb- und Dichtstoffe bereitzustellen, in dem auf die Methanol-abspaltenden Hybridpolymere verzichten werden kann.

Ganz besonders bevorzugt nach der Erfindung ist Verwendung von Heptaisobutyl POSS-Titanium(IV)-Ethoxid (TiPOSS) als Katalysator A. In weiteren besonderes bevorzugten Ausführungsformen ist der Katalysator B ebenfalls eine Metall-Siloxan-Silanol(-at)-Verbindung. Katalysator B kann vorteilhafterweise aber auch eine Metall-organische Verbindung sein.

Erfindungsgemäß kann vorteilhafterweise die Gesamtmenge, der zur Aushärtung von feuchtigkeitsvernetzenden Polymeren verwendeten Katalysatoren reduziert werden, insbesondere des Katalysators A. Dementsprechend enthält vorteilhafterweise eine erfindungsgemäße Zusammensetzung feuchtigkeitsaushärtende silylierte Polymere (SiP) sowie mindestens eine Metall-Siloxan-Silanol(-at)-Verbindung, wobei die Metall-Siloxan-Silanol(-at)-Verbindung dabei mit einem Gewichtsanteil im Bereich von 0,001 bis 5 %, vorzugsweise von 0,002 bis 1 % vorliegt, jeweils bezogen auf das Gesamtgewicht der Zusammensetzung. Die erfindungsgemäßen Zusammensetzungen enthalten bevorzugt silylierte Polymere welche mittels Katalyse durch Metall-Siloxan-Silanol(-at)-Verbindungen in molaren Konzentrationen im Bereich von 0,000001 bis 0,0001 mol/kg oder 0,0001 bis 0,1 mol/kg, insbesondere von 0,00001 bis 0,00005 mol/kg oder 0,001 bis 0,01 mol/kg, jeweils bezogen auf das Gesamtgewicht der Zusammensetzung, hergestellt wurden.

Die Bezeichnung "Katalysator" bezeichnet einen Stoff, der die Aktivierungsenergie einer bestimmten Reaktion herabsetzt und dadurch die Reaktionsgeschwindigkeit erhöht.
Mit der Bezeichnung "Metall-Siloxan-Silanol(-at)" werden alle Metall-Siloxan Verbindungen bezeichnet, die entweder eine oder mehrere Silanol- und/oder Silanolat-Gruppen enthalten. In einer Ausführungsform der Erfindung ist es ebenfalls möglich, dass ausschließlich Metall-Siloxan-Silanolate vorliegen. Solange nicht im Einzelnen zwischen diesen unterschiedlichen Konstellationen differenziert wird, sind alle Kombinationen eingeschlossen. Im Folgenden werden die soeben beschriebenen Metall-Siloxan-Silanol(-at)-Verbindungen (= Metall-Siloxan-Silanol/Silanolat-Verbindungen) auch als oligomere Metallo-Silsesquioxane, "POMS", Metall-Silsesquioxane oder metallisierte Silsesquioxane bezeichnet. Die Termini werden folgend austauschbar verwendet.

Die Metall-Siloxan-Silanol(-at)-Verbindung kann in einer Ausführungsform der vorliegenden Erfindung als Monomer, Oligomer und/oder Polymer zur Herstellung der silylierten Polymere (SiP) der erfindungsgemäßen Zusammensetzung vorliegen, wobei der Übergang von Oligomeren zu Polymeren gemäß der allgemeinen Definition fließend ist.

Vorzugsweise war das Metall beziehungsweise waren die Metalle in der oligomeren und/oder polymeren Metall-Siloxan-Silanol(-at)-Verbindung endständig und/oder innerhalb der Kette vorhanden.

In der erfindungsgemäßen Zusammensetzung, als auch in der Herstellung der silylierten Polymere (SiP) ist die kettenförmige Metall-Siloxan-Silanol(-at)-Verbindung linear, verzweigt und/oder ein Käfig.

In einer bevorzugten Ausführungsform weist die kettenförmige Metall-Siloxan-Silanol(-at)-Verbindung in der erfindungsgemäßen Zusammensetzung und/oder in der Herstellung der silylierten Polymere (SiP) der erfindungsgemäßen Zusammensetzung eine Käfigstruktur auf.

Unter einem "Käfig" oder einer oligomeren oder polymeren "Käfigstruktur" wird im Sinne der Erfindung eine dreidimensionale Anordnung der kettenförmigen Metall-Siloxan-Silanol(-at)-Verbindung verstanden, wobei einzelne Atome der Kette die Eckpunkte einer vielflächigen Grundstruktur der Verbindung bilden. Hierbei werden durch die miteinander verknüpften Atome mindestens zwei Flächen aufgespannt, wobei eine gemeinsame Schnittmenge entsteht. In einer Ausführungsform der Verbindung bildet sich beispielsweise eine würfelförmige Grundstruktur der Verbindung aus. Eine Einkäfig-Struktur oder auch singulär vorliegende Käfig-Struktur, also eine Verbindung, die sich über einen vereinzelt vorliegenden Käfig definiert, stellt die Struktur (IVc) dar. Verbindungen, welche innerhalb der Verbindung mehrere Käfige aufweisen können durch die Verbindungen (I) sowie (Ia) bis (Id) beschrieben werden. Ein Käfig kann erfindungsgemäß "offen" oder auch "geschlossen" vorliegen. Je nachdem ob alle Eckpunkte so verbunden, verknüpft oder koordiniert sind, dass eine geschlossene Käfigstruktur entsteht. Ein Beispiel für einen geschlossenen Käfig stellen die Strukturen (II), (IV), (IVb), (IVc).
Der Begriff "kernig" schreibt erfindungsgemäß die Kernigkeit einer Verbindung, wie viele Metall-Atome darin enthalten sind. Eine einkernige Verbindung weist ein Metall-Atom auf, eine mehr- bzw. zweikernige Verbindung hingegen zwei Metall-Atome innerhalb einer Verbindung auf. Die Metalle können dabei direkt miteinander verbunden sein oder über ihre Substituenten verknüpft. Ein Beispiel für eine erfindungsgemäße einkernige Verbindung stellen z. B. die Strukturen (IV), (IVb), (IVc), (Ia) (Ib) oder (Ic) dar; eine zweikernige Verbindung stellt Struktur (Id) dar.

Eine einkernige Einkäfig-Struktur stellen die Metall-Siloxan-Silanol(-at)-Verbindungen (IV), (IVb) und (IVc) dar. Einkernige Zweikäfig-Strukturen sind z. B. die Strukturen (Ia), (Ib) oder (Ic).
Bevorzugt umfasst die Metall-Siloxan-Silanol(-at)-Verbindung in der Herstellung der silylierten Polymere (SiP) der erfindungsgemäßen Zusammensetzung ein oligomeres Metall-Silsesquioxan.

Insbesondere umfasst die Metall-Siloxan-Silanol(-at)-Verbindung in der Herstellung der silylierten Polymere (SiP) der erfindungsgemäßen Zusammensetzung ein polyhedrales Metall-Silsesquioxan.

In einer Ausführungsform weißt die Metall-Siloxan-Silanol(-at)-Verbindung in der erfindungsgemäßen Zusammensetzung und/oder in der Herstellung der silylierten Polymere (SiP) die allgemeine Formel R*_{q}SiᵣOₛMₜ auf, wobei jeder R* unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl),
jedes M unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2. 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

In einer weiteren Ausführungsform weißt die Metall-Siloxan-Silanol(-at)-Verbindung in der erfindungsgemäßen Zusammensetzung und/oder in der Herstellung der silylierten Polymere (SiP) die allgemeine Formel R^{#}₄Si₄O₁₁Y₂Q₂X₄Z₃ auf, wobei jedes X unabhängig voneinander ausgewählt ist aus der Gruppe bestehend aus Si, M¹, -M³L¹_{Δ}, M³, oder -Si(R⁸)-O-M³L¹_{Δ}, wobei M¹ und M³ unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
jedes Z unabhängig voneinander ausgewählt ist aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
jedes R^{#}, R⁵, R⁶ und R⁷ unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; jedes Y unabhängig voneinander -O-M²-L³_{Δ} bedeutet, oder zwei Y zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus - OH, -O-Methyl, -O-Ethyl, -O-Propyl, -O-Butyl, -O-Octyl, -O-Isopropyl, und -O-Isobutyl, und jedes M² unabhängig voneinander ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
jedes Q unabhängig voneinander H, M⁴L⁴_{Δ}, -SiR⁸, -M³L¹_{Δ}, eine Einfachbindung verknüpft mit M³ von X oder eine Einfachbindung verknüpft mit dem Si-Atom des Rests -Si(R⁸)-O-M³L¹_{Δ} bedeutet, wobei M³, R⁸ und L¹ wie für X definiert sind, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl,
mit dem Vorbehalt, dass mindestens ein X M³, -M³L¹_{Δ} oder -Si(R⁸)-O-M³L¹_{Δ} bedeutet.

Dem Fachmann ist bekannt, dass sich die Anzahl (Δ) möglicher Liganden für L¹_{Δ}, L²_{Δ}, L³_{Δ}, L⁴_{Δ}, direkt aus der Anzahl freier Valenzen des eingesetzten Metallatoms ergibt, wobei die Valenzzahl die Wertigkeit des Metalls beschreibt.

In einer weiteren Ausführungsform weißt die Metall-Siloxan-Silanol(-at)-Verbindung in der erfindungsgemäßen Zusammensetzung und/oder in der Herstellung der silylierten Polymere (SiP) die allgemeine Formel (Y_{0,25}R^{#}SiO_{1,25})₄(Z_{0,75}Y_{0,25}XO)₄(OQ)₂ auf, wobei jedes X unabhängig voneinander ausgewählt ist aus der Gruppe bestehend aus Si, M¹, -M³L¹_{Δ}, M³, oder -Si(R⁸)-O-M³L¹_{Δ}, wobei M¹ und M³ unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3-bis C6-Cycloalkyl, optional substituiertem C2- bis C20-Alkenyl und optional substituiertem C6- bis C10-Aryl;
jedes Z unabhängig voneinander ausgewählt ist aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
jedes R^{#}, R⁵, R⁶ und R⁷ unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl;
jedes Y unabhängig voneinander -O-M²-L³_{Δ} bedeutet, oder zwei Y zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und jedes M² unabhängig voneinander ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
jedes Q unabhängig voneinander H, M⁴L⁴_{Δ}, -SiR⁸, -M³L¹_{Δ}, eine Einfachbindung verknüpft mit M³ von X oder eine Einfachbindung verknüpft mit dem Si-Atom des Rests -Si(R⁸)-O-M³L¹_{Δ}, bedeutet, wobei M³, R⁸ und L¹ wie für X definiert sind, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und - O- (C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl,
mit dem Vorbehalt, dass mindestens ein X M³, -M³L¹_{Δ} oder -Si(R⁸)-O-M³L¹_{Δ} bedeutet.

Bevorzugt weißt die Metall-Siloxan-Silanol(-at)-Verbindung in der erfindungsgemäßen Zusammensetzung und/oder der Herstellung der silylierten Polymere (SiP) die allgemeine Formel Si₄O₉R¹R²R³R⁴X¹X²X³X⁴OQ¹OQ²Y¹Y²Z¹Z²Z³ auf, wobei X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L2 ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
oder
X⁴ -M³L¹_{Δ} bedeutet und Q² H oder eine Einfachbindung verknüpft mit M³ bedeutet und Q¹, H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,
oder
X⁴, Q¹ und Q² unabhängig voneinander -M³L¹_{Δ} bedeuten,
oder
X⁴ -Si(R⁸)-O-M³L¹ bedeutet, Q² eine Einfachbindung verknüpft mit dem Si-Atom von X⁴ bedeutet und Q¹ -M⁴L⁴_{Δ} bedeutet,
oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer weiteren Ausführungsform weißt das Metallsilsesquioxan in der erfindungsgemäßen Zusammensetzung und/oder in der Herstellung der silylierten Polymere (SiP) die allgemeine Formel
(X⁴)(Z¹Y¹X²O)(Z²X¹O₂)(Z³X³O₂)(R¹Y²SiO)(R³SiO)(R⁴SiO₂)(R²SiO₂)(Q¹)(Q²) auf, wobei X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
oder
X⁴ -M³L¹_{Δ} bedeutet und Q² H oder eine Einfachbindung verknüpft mit M³ bedeutet und Q¹ H, M⁴L⁴_{Δ} oder -SiR⁸ bedeutet, wobei M4 ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl,
oder
X⁴, Q¹ und Q² unabhängig voneinander -M³L¹_{Δ} bedeuten,
oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet,
oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einem weiteren Sinne der Erfindung kann der erfindungsgemäß eingesetzte Katalysator auf Basis einer Metall-Siloxan-Silanol(-at)-Verbindung durch die Struktur (I) beschrieben werden, 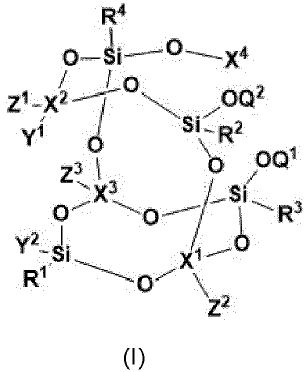 wobei
X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
und X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1-bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
oder
X⁴ -M³L¹ bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl,
oder
X⁴, Q¹ und Q² unabhängig voneinander -M³L¹_{Δ} bedeuten,
oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet,
oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer weiteren bevorzugten Ausführungsform weißt die Metall-Siloxan-Silanol(-at)-Verbindung in der Herstellung der silylierten Polymere die allgemeinen Formel (I) auf, wobei X¹, X² und X³ unabhängig voneinander Si bedeuten,
X⁴ -M³L¹_{Δ} bedeutet und Q¹ und Q² jeweils eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind,
R¹, R², R³ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind,
Y¹ und Y² zusammengenommen sind und zusammen -O- bilden.

In einer Ausführungsform kann die Metall-Siloxan-Silanol(-at)-Verbindung gemäß Formel (I) in der erfindungsgemäßen Zusammensetzung und/oder in der Herstellung der silylierten Polymere (SiP) in Abhängigkeit der vorhandenen Äquivalente an Metall einkernig als Monomer oder mehrkernig als Dimer (zweikernig), Trimer (dreikernig), Multimer (multikernig) und/oder Mischungen daraus vorliegen, sodass beispielsweise Strukturen gemäß der Formeln (Ia) bis (Id) möglich sind,

Weitere erfindungsgemäß einsetzbare mehrkernige Metall-Siloxan-Silanol(-at)-Verbindung sind die Strukturen (Ia), (Ib), (Ic) oder (Id), 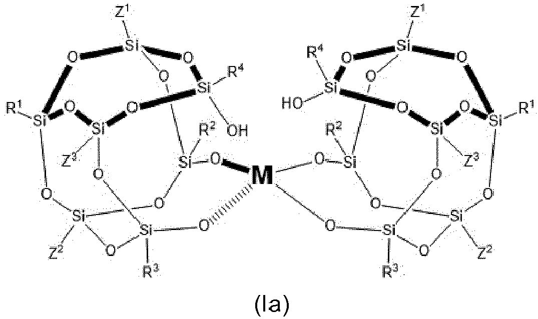 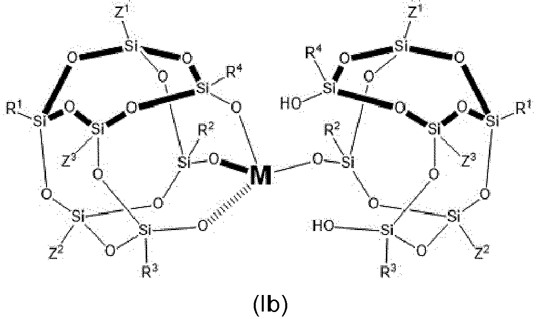 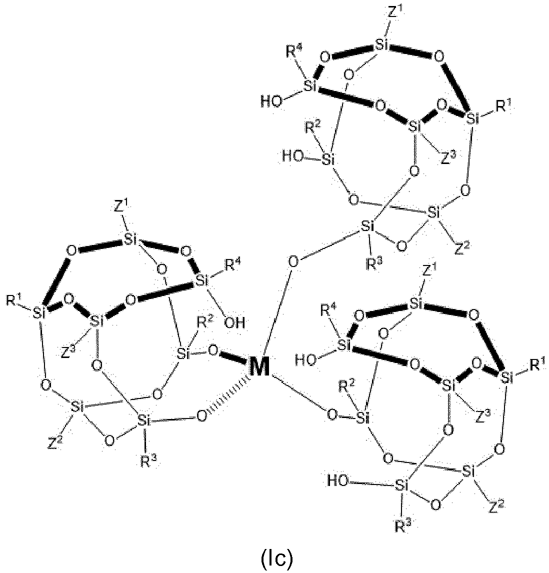 wobei
M ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R (R¹ bis R⁴) unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl). Das vierwertige Metall M stellt hierbei einen gemeinsamen Teil mehrerer Käfige dar. Dabei ist dem Fachmann bekannt, dass die Anzahl der Bindungen zum Metall M abhängig ist von der Wertigkeit des Metalls M. Die Strukturformeln (Ia) bis (Ic) sind gegebenenfalls entsprechend anzupassen.

In einer Ausführungsform der erfindungsgemäßen Zusammensetzung kommt darin und/oder in der Herstellung der silylierten Polymer (SiP) eine Mischung der Metall-Siloxan-Silanol(-at)-Verbindungen gemäß Formel (I), (Ia), (Ib) und (Ic) zum Einsatz.

Ferner kann die mehrkernige Metall-Siloxan-Silanol(-at)-Verbindung gemäß Formel (Id) in der erfindungsgemäßen Zusammensetzung und/oder in der Herstellung der silylierten Polymere (SiP) 6-fach koordinierte Metallzentren aufweisen, sodass Strukturen gemäß Formel (Id) möglich sind 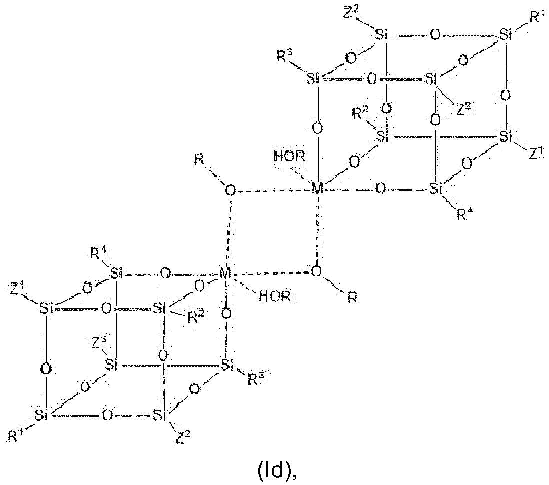 wobei jedes M unabhängig ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl).

Im Sinne der Erfindung beschreibt der Begriff "einkernig" die vereinzelt, also singulär vorliegende Käfig-Struktur des erfindungsgemäßen Katalysators auf Basis einer Metall-Siloxan-Silanol(-at)-Verbindung. Einkernige Katalysatoren auf Basis einer Metall-Siloxan-Silanol(-at)-Verbindung können durch die Struktur (IV) sowie ebenfalls durch die Strukturen (I) und (II) umfasst werden. 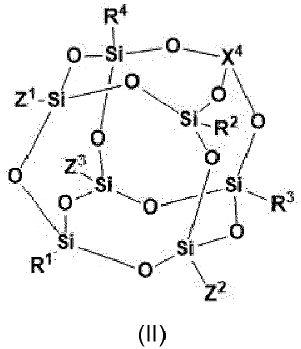 wobei
X⁴ -M³L¹_{Δ} bedeutet, wobei L¹ ausgewählt ist aus der Gruppe bestehend aus -OH und -O-(C1-bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
R¹, R², R³ und R⁴ jeweils unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.
Ferner betrifft die in der zur Herstellung der erfindungsgemäßen silylierten Polymere eingesetzten Metall-Siloxan-Silanol(-at)-Verbindungen der allgemeinen Strukturformel (II), wobei X⁴ -M³L¹_{Δ} bedeutet wobei L¹ ausgewählt ist aus der Gruppe bestehend aus -OH und - O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl und
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.

In einer besonders vorteilhaften Ausführungsform können die silylierten Polymere (SiP) der erfindungsgemäßen Zusammensetzung durch eine katalysierte Reaktion mit Heptaisobutyl POSS-Titanium(IV)-Ethoxid (TiPOSS) als eine Metall-Siloxan-Silanol(-at)-Verbindung hergestellt worden sein und/oder die Zusammensetzung diese beinhalten. Hierbei steht die Abkürzung "TiPOSS" für das einkernige Titan-metallisierte Silsesquioxan der Strukturformel (IV) und kann äquivalent zu "Heptaisobutyl POSS-Titanium(IV)-Ethoxid" im Sinne der Erfindung verwendet werden.

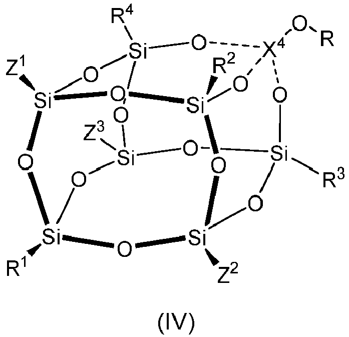

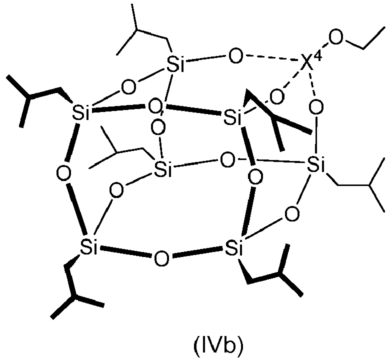

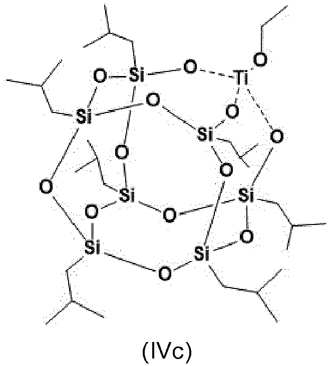

In der erfindungsgemäßen Zusammensetzung und/oder in der Herstellung der silylierten Polymere (SiP) kann die Metall-Siloxan-Silanol(-at)-Verbindung eine Mischung enthaltend die Strukturen (I), (Ia), (Ib), (Ic), (Id), (II), (IV), (IVb), (IVc) darstellen.

In einer bevorzugten Ausführungsform ist das Metall in der Metall-Siloxan-Silanol(-at)-Verbindung ein Titan.

Ganz besonders bevorzugte Katalysatoren aus der Gruppe der Metall-Siloxan-Silanol(-at)-Verbindungen sind das Heptaisobutyl POSS-Titanium(IV)-Ethoxid (TiPOSS) und das Heptaisobutyl POSS-Zinn(IV)-Ethoxid (SnPOSS). Davon bevorzugt ist das Heptaisobutyl POSS-Titanium(IV)-Ethoxid (TiPOSS).

Sofern der Katalysator B nicht ausgewählt ist aus der Gruppe der Metall-Siloxan-Silanol(-at)-Verbindungen, sind es vorzugsweise metall-organische Verbindungen. Besonders bevorzugt sind zinn-, bismut-, zink-, Zirkonium-, aluminium- oder titanorganische Verbindungen. Ganz besonders bevorzugt sind zinn-oder titanorganische Verbindungen.

Der Katalysator B kann dann ausgewählt sein aus der Gruppe bestehend aus Tetraalkyltitanaten, wie Tetramethyltitanat, Tetraethyltitanat, Tetra-n-propyltitanat, Tetraisopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ((RO)₂TiO₂, worin R z.B. für isoPropyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminiumtrisbutylat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylmercaptide, Dibutylmercaptide, Dioctylmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodekanoat, Gemische aus Bismut- und Zinkcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen, Amin-Verbindungen wie Butylamin, Octylamin, Dibutylamin, Monoethanolamin, Diethanolamin, Triethanolamin, Diethylentriamin, Oleylamin, Cyclohexylamin, Benzylamin, Diethylaminopropylamin, Xylylendiamin, Triethylendiamin, Guanidin, Diphenylguanidin, 2,4,6,-Tris)dimethylaminomethyl)phenol, Morpholin, N-Methylmorpholin, 2-Ethyl-4-Methylimidazol und 1,8-Diazabicylo(5.4.0)undecen-7 (DBU), Salze dieser Amine mit Carbonsäuren oder anderen Säuren oder Mischungen davon.

Der Katalysator B kann bevorzugt ausgewählt sein aus der Gruppe bestehend aus Dibutylzinndilaurat (DBTL), Zinn(II)-2-ethylhexanoat (Zinnoctoat), Zink(II)-2-ethylhexanoat, Zink(II)-neodekanoat, Bismut(III)-tris(2-ethylhexonat), Bismut(III)-tris(neodecanoat) oder Mischungen davon.

Bei dem Katalysator B handelt es sich besonders bevorzugt um Dibutylzinndilaurat (DBTL).

Bevorzugsweise liegen die Katalysatoren in einem Verhältnis zueinander vor zwischen 1:10 und 10:1, weiter bevorzugt liegen die Katalysatoren A und B in einem Verhältnis zwischen 1:8 und 8:1 zueinander vor, insbesonders bevorzugt liegen die Katalysatoren A und B in einem Verhältnis zwischen 1:5 und 5:1 zueinander vor, weiter insbesonders bevorzugt liegen die Katalysatoren A und B in einem Verhältnis zwischen 1:2 und 2:1 zueinander vor, ganz besonders bevorzugt in einem Verhältnis von 0,9:1,1 und 1,1:0,9 zueinander vor, bezogen auf Gewichtsprozent.

In einer bevorzugten erfindungsgemäßen Zusammensetzung liegt die Gesamtkatalysatormenge, zusammengesetzt aus mindestens einem Katalysator A und einem Katalysator B, zwischen 5 und 30000 ppm, weiter bevorzugt zwischen 15 und 20000 ppm, besonders bevorzugt zwischen 20 und 15000 ppm, ganz besonders bevorzugt zwischen 20 und 10000 ppm, bezogen auf das Gesamtgewicht der Zusammensetzung.

"Polymere" sind chemische Verbindungen aus Ketten- oder verzweigten Molekülen (Makromolekülen), die ihrerseits aus einer Anzahl von gleichen/gleichartigen oder auch ungleichen Einheiten, den so genannten Monomeren bestehen. Polymere umfassen dabei auch Oligomere. Oligomere sind Polymere, welche eine kleinere Anzahl von Einheiten aufweist. Sofern nicht ausdrücklich anderweitig definiert, fallen erfindungsgemäß Oligomere unter die Begrifflichkeit der Polymere. Polymere können als Homopolymere (= bestehen aus nur einer Monomereinheit), Copolymere (= bestehen aus zwei oder mehreren Monomereinheiten) oder als Polymermischung (= Polymerlegierung, Polymerblends, also Mischungen aus unterschiedlichen Polymeren und Copolymeren) vorkommen.

Im Sinne der Erfindung handelt es sich bei "silylierten Polymeren" um Silan-modifizierte, Silan-funktionelle oder Silan-terminierte Polymere, die auch austauschbar als SMP, STP oder SiP bezeichnet werden. Die Definition schließt Polymerisate, Polykondensate oder Polyaddukte ein.

Ferner handelt es sich dabei um feuchtigkeitsvernetzende Polymere, welche unter Einfluss von Wasser, entweder durch Zugabe oder Mischungsbestandteile von bzw. mit Wasser oder durch in Kontakt bringen mit Luftfeuchtigkeit aushärten können bevorzugt unter zusätzlicher Verwendung eines Katalysators.

Silan-funktionelle Polymere werden allgemein gebräuchlich sowie erfindungsgemäß auch als Hybridpolymere bezeichnet. Diese Polymere können die Härtungschemie von Alkoxysilangruppen mit der Chemie der Polyole bzw. Polyurethane kombinieren. Alkoxysilangruppen sind von der Silikonchemie her bekannt, die isocyanatfunktionellen Polymere, insbesondere hydroxyfunktionellen Polymere, steuern mindestens Teile des Rückgrats ("polymer backbone") des Hybridpolymers bei. Über die reaktiven Silanendgruppen erfolgt durch Zutritt von beispielsweise Luftfeuchtigkeit eine Vernetzung ("Aushärtung"). Der Aushärtemechanismus dieser Systeme ist vorzugsweise neutral.

"Alkoxy" bezeichnet eine Alkylgruppe, die über ein Sauerstoffatom mit der Hauptkohlenstoffkette bzw. dem Hauptgerüst der Verbindung verbunden ist.

Silan-funktionelle Polymere (SiP) beinhalten ein Polymerrückgrat (P) sowie mindesten zwei Endgruppen oder funktionelle Gruppen bzw. Modifikationen der allgemeinen folgenden Formel (V) 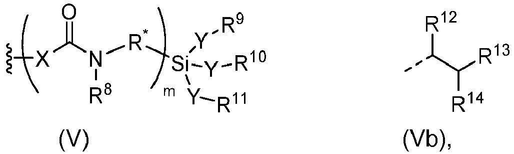 wobei
- X C, Si oder ein Heteroatom ist und diese je nach ihrer Bindigkeit optional ein oder mehrere Reste R⁸ aufweisen, bevorzugt C, N, O, P, S, besonders bevorzugt C, N oder O, ganz besonders bevorzugt N oder O ist und jeweils an ein Kohlenstoff im Polymerrückgrat gebunden ist,
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet,
- R⁸ H, eine optional substituierte, geradkettige oder verzweigte C1- bis C25-Alkylgruppe, eine optional substituierte, geradkettige oder verzweigte C2- bis C25-Alkenylgruppe oder eine optional substituierte, geradkettige oder verzweigte C2- bis C18-Alkinylgruppe, eine optional substituierte C4- bis C18-Cycloalkylgruppe oder eine optional substituierte C4- bis C18-Arylgruppe oder einen Rest der allgemeinen Struktur (Vb) bedeutet,
- R¹² und R¹⁴ jeweils unabhängig voneinander für H oder einen Rest aus der Gruppe bestehend aus -R¹⁵, -COOR¹⁵ und -CN,
- R¹³ für H oder für einen Rest aus der Gruppe bestehend aus -CH₂-COOR¹⁵, -COOR¹⁵, -CONHR¹⁵, -CON(R¹⁵), -CN, -NO₂, -PO(OR¹⁵)₂, -SOR¹⁵ und -SO₂OR¹⁵,
- R¹⁵ für einen gegebenenfalls mindestens ein Heteroatom aufweisenden, Kohlenwasserstoffrest mit 1 bis 20 C-Atomen,
- R⁹, R¹⁰ und R¹¹ unabhängig voneinander H, eine optional substituierte, geradkettige oder verzweigte C1- bis C20-Alkylgruppe, eine optional substituierte, geradkettige oder verzweigte C2- bis C20-Alkenylgruppe oder eine optional substituierte C4- bis C14-Cycloalkylgruppe oder eine optional substituierte C4- bis C14-Arylgruppe bedeutet, bevorzugt mindestens R⁹ eine C2-Alkylgruppe ist, besonders bevorzugt mindestens R⁹ und R¹⁰ eine C2-Alkylgruppe ist und
- m 0 oder 1 ist und wenn m = 0 ist, ist das Si-Atom direkt an ein Kohlenstoff im Polymerrückgrat (P) gebunden.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel, sofern nichts anderes angegeben ist. P bezeichnet insbesondere Phosphor, sofern nichts anderes angegeben ist. C bezeichnet insbesondere Kohlenstoff, sofern nichts anderes angegeben ist. H bezeichnet insbesondere Wasserstoff, sofern nichts anderes angegeben ist. Si bezeichnet insbesondere Silizium, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1- bis C4-Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

Mit der Bezeichnung "Alkylgruppe" ist eine gesättigte Kohlenwasserstoffkette gemeint. Alkylgruppen weisen insbesondere die allgemeine Formel -CₙH₂ₙ₊₁ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1- bis C16-Alkylgruppen sind Methyl-, Ethyl-, Propyl-, Butyl-, Isopropyl-, iso-Butyl-, sec-Butyl-, tert-Butyl-, n-Pentyl- und Ethylhexyl. Entsprechend bezeichnet eine "C1- bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen, die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel -CnH2n-1 auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.
"Arylgruppen" bezeichnen monocyclische (z. B. Phenyl-), bicyclische (z. B. Indenyl-, Naphthalenyl, Tetrahydronapthyl, oder Tetrahydroindenyl) und tricyclische (z. B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht speziell angegeben ist.

Beispielsweise können silylierte Polymere, welche feuchtigkeitshärtend sind, in der erfindungsgemäßen Zusammensetzungen eingesetzt werden, insbesondere silylierte Polyether und/oder silylierte Polyurethan-Polymere (SPUR). Silylierte Polymere oder Silan-terminierte Polymere, welche in der erfindungsgemäßen Zusammensetzung eingesetzt werden können, beinhalten mindestens zwei oder mehr reaktive Silan-Gruppen z. B. Alkoxy-Silane.

Ein Beispiel für mögliche, erfindungsgemäß einsetzbare silylierten Polymere sind Oxyalkylen-Polymere, welche mindestens eine reaktive Silan-Gruppe an jedem Ende des Polymer-Moleküls aufweist. Das Rückgrat, oder auch Backbone des erfindungsgemäßen Silan-terminierten Oxyalkylen-Polymers weist sich wiederholende der allgemeinen Formel (1) auf:

-R-O- (1)

wobei R eine bivalente organische Gruppe, bevorzugt eine gerade oder verzweigte Alkylen-Gruppe beinhaltend 1 bis 14 Kohlenstoffatome, besonders bevorzugt eine gerade oder verzweigte Alkylen-Gruppe beinhaltend 2 bis 4 Kohlenstoffatome ist oder Mischungen davon. Ganz besonders bevorzugt Polypropylen-oxid-Rückgrate, Polyethylen-oxid-Rückgrate und Copolyethylen-Oxid/Copolypropylen-Oxid-Rückgrate sind oder Mischungen davon. Andere sich wiederholende Einheiten können folgende Einheiten beinhaltend, sind darauf jedoch nicht beschränkt: -CH₂-O-, -CH₂CH(CH₃)O-, -CH₂CH(C₂H₅)O-, -CH₂C(CH₃)O-, -CH₂CH₂CH₂CH₂O- und weitere struktur-ähnliche.

Die reaktiven Silan-Gruppen in den silylierten Polymeren (SiP) können durch folgende Formel (2) beschrieben werden:

-Si(R²)₃₋ₐ(G)ₐ (2)

wobei jeder R² unabhängig voneinander eine C1- bis C20-Alkylgruppen, eine C6- bis C20-Aryl-Gruppe, eine C7- bis C20-Aralkyl-Gruppe oder eine Mischung davon,
- G eine hydrolysierbare Gruppe oder eine Hydroxylgruppe darstellen kann, und wenn zwei oder mehrere G vorhanden sind, diese gleich oder unterschiedlich sein können und
- a eine ganze Zahl von 1 bis 3 bedeutet.

In einer reaktiven Silan-Gruppe beschrieben durch die Formel (2), ist mindestens eine hydrolysierbare oder Hydroxy-Gruppe vertreten durch G.

"Hydrolysierbare Gruppen" sind erfindungsgemäß solche, die sich durch Einfluss von Wasser, z. B. aus der Luftfeuchtigkeit oder durch Zusatz von Wasser oder wasserhaltigen Bestandteilen, Hydrolysereaktionen eingehen können und in Folge dessen Silanole bilden können. Hydrolysierbare Gruppen können beispielsweise Alkoxygruppen, selterner auch -Cl sein. In ähnlicher Weise können diese Gruppen (oder die von ihnen gebildeten Silanole) mit OH- oder COOH-Gruppen an Oberflächen reagieren und einen Verbund bilden.

Im Sinne der Erfindung sind "Silanole" organische Siliziumverbindungen, bei denen mindestens eine Hydroxylgruppe (OH) an das Silizium-Atom gebunden ist (-Si-OH).

Im Sinne der Erfindung sind "Silanolate" organische Siliziumverbindungen, bei denen mindestens eine deprotonierte Hydroxyfunktion (R-O-) an das Silizium-Atom gebunden ist (-Si-O-), wobei dieses negativ geladenen Sauerstoffatom auch an weitere Verbindungen, wie beispielsweise Metalle, chemisch kovalent gebunden und/oder koordiniert sein kann.

Isocyanatreaktive Verbindungen sind erfindungsgemäß solche, die mit einem Isocyanat reagieren können. Diese Verbindungen können eine oder mehrere NH-, OH- oder SH-Funktionen aufweisen.

Zu den isocyanatreaktiven Verbindungen zählt insbesondere die Klasse der hydroxyfunktionelle Verbindungen. Polyole sind hydroxyfunktionelle Verbindungen, insbesondere hydroxyfunktionelle Polymere. Geeignete Polyole für die Herstellung von Polyurethanpolymeren sind insbesondere Polyetherpolyole, Polyesterpolyole und Polycarbonatpolyole sowie Mischungen dieser Polyole.

"Polyether" stellen eine Klasse der Polymere dar. Sie sind langkettige Verbindungen umfassend mindestens zwei gleiche oder unterschiedliche Ethergruppen. Erfindungsgemäß wird auch von Polyethern gesprochen, wenn die polymeren Ethergruppen durch andere Gruppe unterbrochen sind (z. B. durch einpolymerisierte/eingebaute Isocyanate oder weitere Polymer- oder Oligomereinheiten anderer Monomerherkunft).

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen.

Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Doppelmetall-Cyanidkomplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30000 g/mol, sowie Polyoxyethylendiole, Polyoxyethylentriole, Polyoxypropylendiole und Polyoxypropylentriole mit einem Molekulargewicht von 200 bis 20000 g/mol. Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole. Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte. Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden. Insbesondere geeignet sind Polyesterpolyole, welche hergestellt sind aus zwei bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton. Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole. Darüber hinaus können Polycarbonatdiole oder Polyether-Polycarbonatdiole über eine Polymerisation von Propylenoxid mit CO₂ erhältlich sein.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Rizinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können. Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® CTBN von der Firma Emerald Performance Materials, LLC, USA, hergestellt werden können.

Diese ebenfalls besonders bevorzugten Polyole weisen ein mittleres Molekulargewicht von 250 bis 40000 g/mol, insbesondere von 1000 bis 30000 g/mol, und eine mittlere OH-Funktionalität im Bereich von 1,6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.
Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polymers (z. B. in der AmSi-Route) mitverwendet werden.

Isocyanathaltige Verbindungen (Iso oder Iso-Si) weisen mindestens eine NCO-Gruppe (= Isocyanat-Gruppe) auf. Es kann zwischen den Monoisocyanaten (z = 1) und den Di- und Polyisocyanaten (z = ≥ 2) unterschieden werden. Die NCO-Gruppen können beispielsweise mit Alkoholen zu Urethanen oder mit Aminen zu Harnstoffderivaten reagieren. Die erfindungsgemäßen Isocyanathaltigen Verbindungen können durch die allgemeine Formel (VI) beschrieben werden.

R^{x}(̵N=C=O)_{z} (VI),

wobei
- R^{x} eine Kohlenstoff-haltige Gruppe bedeutet, bevorzugt mindestens eine aromatische oder aliphatische Gruppe oder Mischungen davon bedeutet, besonders bevorzugt eine optional substituierte, geradkettige oder verzweigte C1- bis C20-Alkylgruppe, eine optional substituierte, geradkettige oder verzweigte C2- bis C20-Alkenylgruppe oder eine optional substituierte, geradkettige oder verzweigte C2- bis C20-Alkinylgruppe, eine optional substituierte C4- bis C14-Cycloalkylgruppe oder eine optional substituierte C4- bis C14-Arylgruppe bedeutet, ganz besonders bevorzugt Diphenylmethan, Toluol, Dicylohexylmethan, Hexan oder Methyl-3,5,5-trimethylcyclohexyl bedeutet oder
- R^{x} eine -(R*)-Si(YR^{9/10/11})₃ Gruppe bedeutet, wobei R⁹, R¹⁰ und R¹¹ unabhängig voneinander H, eine optional substituierte, geradkettige oder verzweigte C1- bis C25-Alkylgruppe, eine optional substituierte, geradkettige oder verzweigte C2- bis C25-Alkenylgruppe oder eine optional substituierte C4- bis C18-Cycloalkylgruppe oder eine optional substituierte C4- bis C18-Arylgruppe bedeutet,
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet und
- z mindestens 1 ist, bevorzugt mindestens 1 oder 2 ist, besonders bevorzugt 1 oder 2 ist.

Erfindungsgemäß können silylierte Polymer (SiP) auf zwei Routen durch eine Metall-Siloxan-Silanol(-at)-Verbindung katalysierte Synthese von mindestens einer isocyanatreaktiven Verbindung, insbesondere einem hydroxyfunktionalisierten Polymer, und einer mindestens eine Isocyanat-Gruppen aufweisenden Verbindung hergestellt werden.

In einer erfindungsgemäße Route erfolgt die Synthese über die eine Metall-Siloxan-Silanol(-at)-Verbindung katalysierte Synthese einer isocyanatreaktiven Verbindung, insbesondere einem hydroxyfunktionalisierten Polymer, und einer Di- oder Polyisocyanatverbindung (Iso). Nachfolgend wird das erhaltende Isocyanat-Gruppen haltige Prepolymer mit einem Aminosilan (AmSi) umgesetzt zum erfindungsgemäßen silylierten Polymer (SiP). Diese Synthese-Route wird erfindungsgemäß als "AmSi-Route" bezeichnet.

Als Di- oder Polyisocyanate (Iso) für die Herstellung des erfindungsgemäßen Polymers können handelsübliche Isocyanate, insbesondere Di- oder Polyisocyanate der allgemeinen Formel (VI), verwendet werden

R^{x}(̵N=C=O)_{z} (VI),

wobei
- R^{x} eine Kohlenstoff-haltige Gruppe bedeutet, bevorzugt mindestens eine aromatische oder aliphatische Gruppe oder Mischungen davon bedeutet, besonders bevorzugt eine optional substituierte, geradkettige oder verzweigte C1- bis C20-Alkylgruppe, eine optional substituierte, geradkettige oder verzweigte C2- bis C20-Alkenylgruppe oder eine optional substituierte, geradkettige oder verzweigte C2- bis C20-Alkinylgruppe, eine optional substituierte C4- bis C14-Cycloalkylgruppe oder eine optional substituierte C4- bis C14-Arylgruppe bedeutet, ganz besonders bevorzugt Diphenylmethan, Toluol, Dicylohexylmethan, Hexan oder Methyl-3,5,5-trimethylcyclohexyl bedeutet und
- z mindestens 2 ist, bevorzugt 2 oder >2 ist.

Beispielsweise sind geeignete Diisocyanate 1,6-Hexamethylendiisocyanat (HDI) Methylendiphenylisocyanat (MDI), insbesondere von 4,4'-Methylendiphenylisocyanat (4,4' MDI), 2,4' Methylendiphenylisocyanat (2,4' MDI), 2,2'-Methylendiphenylisocyanat (2,2' MDI), 4,4'-Diisocyanatodicyclohexylmethan (H12MDI), 2-Methylpentamethylen-1,5-diisocyanat, 2,2,4- und 2,4,4-Trimethyl-1,6-hexamethylendiisocyanat (TMDI), 1,12 Dodecamethylendiisocyanat, Lysin-und Lysinesterdiisocyanat, Cyclohexan-1,3-diisocyanat, Cyclohexan-1,4-diisocyanat, 3-Isocyanatmethyl-3,5,5-trimethylcyclohexylisocyanat (= Isophorondiisocyanat oder IPDI), Perhydro-2,4'-diphenylmethandiisocyanat und, Perhydro-4,4'-diphenylmethandiisocyanat, 1,4-Diisocyanato-2,2,6-trimethylcyclohexan (TMCDI), 3-Isocyanatmethyl-3,5,5-trimethylcyclohexylisocyanat (= Isophorondiisocyanat oder IPDI), 1,6 Hexamethylendiisocyanat (HDI) oder das Trimer daraus (HDI-Trimer), 2,2,4 Trimethyl-1,6-hexamethylendiisocyanat und/oder 2,4,4- 1,4-Bis-(isocyanat)cyclohexan, 1,4 Bis (isocyanat)benzol (PPDI), 1,3- und/oder 1,4-Bis-(isocyanatomethyl)-cyclohexan, m- und/oder p-Xylylendiisocyanat (m- und/oder p-XDI), m- und/oder p-Tetramethyl-1,3-xylylendiisocyanat, m- und/oder p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 21,3-Bis(isocyanat-4-methyl-phenyl)-2,4-dioxo-1,3,5,6-Tetramethyl-1,4-diisocyanatobenzol diazetidin, Naphthalin-1,5-diisocyanat (NDI), 3,3'3'-Dimethyl-4,4'4'-diisocyanatodiphenyl (TODI), 2,4- und/oder 2,6-Toluylendiisocyanat (TDI), 1,3-Bis(isocyanatmethyl)benzol oder Mischungen davon, bevorzugt 4,4' Methylendiphenylisocyanat (4,4' MDI) oder Isophorondiisocyanat (IPDI), 1,6 Hexamethylendiisocyanat (HDI) oder das Trimer daraus (HDI-Trimer) oder Mischungen davon, ganz besonders bevorzugt 4,4'-Methylendiphenylisocyanat (4,4' MDI) oder Isophorondiisocyanat (IPDI), Oligomere und Polymere der vorgenannten Isocyanate, sowie beliebige Mischungen der vorgenannten Isocyanate.

Die anschließende Umsetzung mit einem Aminosilan (AmSi) nach der Formel (VIII) liefert das silylierte Polymer (SiP). 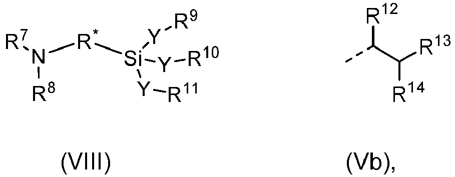 wobei
- R⁷ H ist,
- R⁸ H, eine optional substituierte, geradkettige oder verzweigte C1- bis C25-Alkylgruppe, eine optional substituierte, geradkettige oder verzweigte C2- bis C25-Alkenylgruppe oder eine optional substituierte C4- bis C18-Cycloalkylgruppe oder eine optional substituierte C4- bis C18-Arylgruppe oder einen Rest der allgemeinen Struktur (Vb) bedeutet,
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
- R¹² und R¹⁴ jeweils unabhängig voneinander für H oder einen Rest aus der Gruppe bestehend aus -R¹⁵, -COOR¹⁵ und -CN,
- R¹³ für H oder für einen Rest aus der Gruppe bestehend aus -CH₂-COOR¹⁵, -COOR¹⁵, -CONHR¹⁵, -CON(R¹⁵), -CN, -NO₂, -PO(OR¹⁵)₂, -SOR¹⁵ und -SO₂OR¹⁵,
- R¹⁵ für einen gegebenenfalls mindestens ein Heteroatom aufweisenden, Kohlenwasserstoffrest mit 1 bis 20 C-Atomen,
- R⁹, R¹⁰ und R¹¹ unabhängig voneinander H, eine optional substituierte, geradkettige oder verzweigte C1- bis C25-Alkylgruppe, eine optional substituierte, geradkettige oder verzweigte C2- bis C25-Alkenylgruppe oder eine optional substituierte C4- bis C18-Cycloalkylgruppe oder eine optional substituierte C4- bis C18-Arylgruppe bedeutet, bevorzugt mindestens R⁹ eine C2-Alkylgruppe ist, besonders bevorzugt R⁹ und R¹⁰ eine C2-Alkylgruppe ist und
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet.

Als "Aminosilane" werden Organosilane bezeichnet, deren organischer Rest eine Aminogruppe aufweist. Als "primäre Aminosilane" werden Aminosilane bezeichnet, welche eine primäre Aminogruppe aufweisen, also eine NH2-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Das erfindungsgemäße silylierte Polymer (SiP) kann auf einer zweiten Route erhalten werden. Diese zweite Synthese-Route wird erfindungsgemäß als "Iso-Si-Route" oder "Isocyanato-Route" bezeichnet.
Durch die Umsetzung eines Isocyanatosilans (Iso-Si) der Formel (VI), bevorzugt der Formel (VII) mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung kann im stöchiometrischen Verhältnis der Isocyanatgruppen zu den gegenüber Isocyanatgruppen reaktiven funktionellen Endgruppen von 0,9:1,1 bis 1,1:0,9 erfolgen, oder mit leichtem Überschuss der gegenüber Isocyanatgruppen reaktiven funktionellen Endgruppen, beispielsweise bei Temperaturen von 20°C bis 100°C, unter Mitverwendung mindestens einer Metall-Siloxan-Silanol(-at)-Verbindung als Katalysator.

R^{x}(̵N=C=O)_{z} (VI),

wobei
- R^{x} eine -(R*)-Si(YR^{9/10/11})₃ Gruppe bedeutet, wobei R⁹, R¹⁰ und R¹¹ unabhängig voneinander H, eine optional substituierte, geradkettige oder verzweigte C1- bis C25-Alkylgruppe, eine optional substituierte, geradkettige oder verzweigte C2- bis C25-Alkenylgruppe oder eine optional substituierte C4- bis C18-Cycloalkylgruppe oder eine optional substituierte C4- bis C18-Arylgruppe bedeutet,
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet und
- z mindestens 1 ist, bevorzugt 1 ist.

Bevorzugt wird im erfindungsgemäßen Sinne das Isocyanatosilan (Iso-Si) ausgewählt aus der Gruppe der nachfolgenden Verbindungen der allgemeinen Formel (VII) 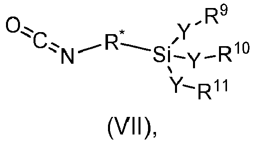 wobei
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet,
- R⁹, R¹⁰ und R¹¹ unabhängig voneinander H, eine optional substituierte, geradkettige oder verzweigte C1- bis C20-Alkylgruppe, eine optional substituierte, geradkettige oder verzweigte C2- bis C20-Alkenylgruppe oder eine optional substituierte C4- bis C14-Cycloalkylgruppe oder eine optional substituierte C4- bis C14-Arylgruppe bedeutet, bevorzugt mindestens R⁹ eine C2-Alkylgruppe ist, besonders bevorzugt R⁹ und R¹⁰ eine C2-Alkylgruppe ist und
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden.

Erfindungsgemäße Endgruppen im silylierten Polymer (SiP) können durch die allgemeine Formel (V) beschrieben werden 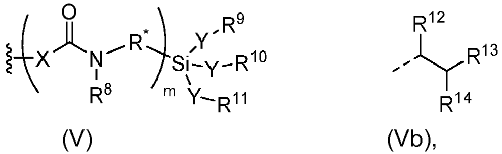 wobei
- X C, Si oder ein Heteroatom ist und diese je nach ihrer Bindigkeit optional ein oder mehrere Reste R⁸ aufweisen, bevorzugt C, N, O, P, S, besonders bevorzugt C, N oder O, ganz besonders bevorzugt N oder O ist und an ein Kohlenstoff im Polymerrückgrat gebunden ist,
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe, bevorzugt eine optional substituierte, geradkettige oder verzweigte C1- bis C15-Alkylgruppe bedeutet und wenn R* = 0 ist, ist das Si-Atom direkt mit dem N-Atom verbunden,
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet,
- R⁸ H, eine optional substituierte, geradkettige oder verzweigte C1- bis C25-Alkylgruppe, eine optional substituierte, geradkettige oder verzweigte C2- bis C25-Alkenylgruppe oder eine optional substituierte, geradkettige oder verzweigte C2- bis C18-Alkinylgruppe, eine optional substituierte C4- bis C18-Cycloalkylgruppe oder eine optional substituierte C4- bis C18-Arylgruppe oder einen Rest der allgemeinen Struktur (Vb) bedeutet,
- R¹² und R¹⁴ jeweils unabhängig voneinander für H oder einen Rest aus der Gruppe bestehend aus -R¹⁵, -COOR¹⁵ und -CN,
- R¹³ für H oder für einen Rest aus der Gruppe bestehend aus -CH₂-COOR¹⁵, -COOR¹⁵, -CONHR¹⁵, -CON(R¹⁵), -CN, -NO₂, -PO(OR¹⁵)₂, -SOR¹⁵ und -SO₂OR¹⁵,
- R¹⁵ für einen gegebenenfalls mindestens ein Heteroatom aufweisenden, Kohlenwasserstoffrest mit 1 bis 20 C-Atomen,
- R⁹, R¹⁰ und R¹¹ unabhängig voneinander H oder C1- oder C2-Alkylgruppe bedeutet, bevorzugt mindestens R⁹ eine C2-Alkylgruppe ist, besonders bevorzugt R⁹ und R¹⁰ eine C2-Alkylgruppe ist und
- m 0 oder 1 ist und wenn m = 0 ist, ist das Si-Atom direkt an ein Kohlenstoff im Polymerrückgrat (P) gebunden.

In einer bevorzugten Ausführungsform enthält die erfindungsgemäße Zusammensetzung zwei Katalysatoren A und B, wobei A Heptaisobutyl POSS-Titanium(IV)-Ethoxid (TiPOSS) oder Heptaisobutyl POSS-Zinn(IV)-Ethoxid (SnPOSS) ist und B Dibutylzinnlaurat (DBTL) oder Heptaisobutyl POSS-Zinn(IV)-Ethoxid (SnPOSS) ist, wenn A nicht Heptaisobutyl POSS-Zinn(IV)-Ethoxid (SnPOSS) ist.

In einer besonders bevorzugten Ausführungsform wird das silylierte Polymer (SiP) durch eine Synthese von mindestens einer isocyanatreaktiven Verbindung (Komponente A) ausgewählt aus der Gruppe aus NH-, OH- oder SH-Funktionen aufweisenden Verbindung, und einer oder mehreren mindestens eine Isocyanat-Gruppen aufweisenden Verbindung ausgewählt aus der Gruppe aus Isocyanaten (Iso) und/oder Isocyanato-Silanen (Iso-Si), katalysiert durch mindestens eine einkernige Metall-Siloxan-Silanol(-at)-Verbindung, hergestellt.

In einer weiteren bevorzugten Ausführungsform wird das silylierte Polymer (SiP) durch eine Synthese von mindestens einem hydroxyfunktionalisierten Polymer (Komponente A) ausgewählt aus der Gruppe aus Polypropylendiole, Polyesterpolyole, oder Mischungen daraus und einer oder mehreren mindestens eine Isocyanat-Gruppen aufweisenden Verbindung ausgewählt aus der Gruppe aus 4,4'-Methylendiphenylisocyanat (4,4'-MDI), Isophorondiisocyanat (IPDI) oder Mischungen davon und/oder 3-(Triethoxysilyl)methylisocyanat, 3-(Triethoxysilyl)propylisocyanat, oder Mischungen davon, katalysiert durch mindestens eine einkernige Einkäfig-Metall-Siloxan-Silanol(-at)-Verbindung, hergestellt.

In einer weiteren bevorzugten Ausführungsform wird das silylierte Polymer (SiP) durch eine Synthese von mindestens einem hydroxyfunktionalisierten Polymer (Komponente A) ausgewählt aus der Gruppe aus Polypropylendiole, Polyesterpolyole, oder Mischungen daraus und einer oder mehreren mindestens eine Isocyanat-Gruppen aufweisenden Verbindung ausgewählt aus der Gruppe aus 4,4'-Methylendiphenylisocyanat (4,4'-MDI), Isophorondiisocyanat (IPDI) oder Mischungen davon und/oder 3-(Triethoxysilyl)methylisocyanat, 3-(Triethoxysilyl)propylisocyanat, oder Mischungen davon, katalysiert durch mindestens eine einkernige Titan-Siloxan-Silanol(-at)-Verbindung, insbesondere durch Heptaisobutyl POSS-Titanium(IV)-Ethoxid (TiPOSS), hergestellt.

In einer weiteren alternativen Ausführungsform aller obigen Kombinationen wird das silylierte Polymer (SiP) durch Umsetzung mit einem Aminosilan (AmSi) ausgewählt aus der Gruppe aus N-[3-(Triethoxysilyl)methyl]butylamin, N-[3-(Triethoxysilyl)propyl]butylamin, N-(3-Triethoxysilyl-propyl)-amino-bernsteinsäure-diethylester oder eine Mischung davon, hergestellt.
In einer ganz besonders bevorzugten Ausführungsform wird das silylierte Polymer (SiP) der erfindungsgemäßen Zusammensetzung durch eine mit Heptaisobutyl POSS-Titanium(IV)-Ethoxid (TiPOSS) katalysierte Synthese von einer Komponente A ausgewählt aus der Gruppe aus Polypropylendiole, Polyesterpolyole, oder Mischungen daraus mit einer Komponente B ausgewählt aus der Gruppe aus 3-(Triethoxysilyl)methylisocyanat, 3-(Triethoxysilyl)propylisocyanat oder Mischungen daraus, hergestellt.

In einer weiteren ganz besonders bevorzugten Ausführungsform wird das silylierte Polymer (SiP) der erfindungsgemäßen Zusammensetzung durch eine mit Heptaisobutyl POSS-Titanium(IV)-Ethoxid (TiPOSS) katalysierte Synthese von einer Komponente A ausgewählt aus der Gruppe aus Polypropylendiole, Polyesterpolyole, oder Mischungen daraus mit einer Komponente B ausgewählt aus der Gruppe aus 4,4'-Methylendiphenylisocyanat (4,4'-MDI), Isophorondiisocyanat (IPDI) oder Mischungen daraus sowie nachfolgender Silanisierung mit einem Aminosilan ausgewählt aus der Gruppe aus N-[3-(Triethoxysilyl)methyl]butylamin, N-[3-(Triethoxysilyl)propyl]butylamin, N-(3-Triethoxysilyl-propyl)-amino-bernsteinsäure-diethylester oder eine Mischung daraus, hergestellt.

In der bevorzugtesten Ausführungsform weisen alle obigen Kombinationen Heptaisobutyl POSS-Titanium(IV)-Ethoxid (TiPOSS) als Katalysator in der Synthese des silylierten Polymers (SiP) auf.
In einer alternativen Ausführungsform weisen alle obigen Kombinationen in den Ausführungsformen anstatt Heptaisobutyl POSS-Titanium(IV)-Ethoxid (TiPOSS) in der Synthese des silylierten Polymers (SiP) auf, sondern Heptaisobutyl POSS-Zinn(IV)-Ethoxid (SnPOSS) auf oder eine Mischung aus beiden Katalysatoren. In der jedoch bevorzugtesten Ausführungsform ist nur Heptaisobutyl POSS-Titanium(IV)-Ethoxid (TiPOSS) als Katalysator in der Synthese des silylierten Polymers (SiP) enthalten.

Die erfindungsgemäße Zusammensetzung aller obigen Kombinationen weist in einer bevorzugten Ausführungsform einen weiteren Katalysator auf ausgewählt aus der aus Metall-Siloxan-Silanol(-at)-Verbindungen, insbesondere Heptaisobutyl POSS-Titanium(IV)-Ethoxid (TiPOSS) oder Heptaisobutyl POSS-Zinn(IV)-Ethoxid (SnPOSS), Dibutylzinndilaurat (DBTL) oder Mischungen davon.

In einer besonders bevorzugten Ausführungsform alle obigen Kombinationen der erfindungsgemäßen Zusammensetzung Dibutylzinndilaurat (DBTL) als zweiten Katalysator auf.

In einer weiter bevorzugten Ausführungsform, umfasst diese Additive aus der Gruppe umfassend ein oder mehrere Füllstoffe ausgewählt aus der Gruppe aus anorganischen und organischen Füllstoffen, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, kalzinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln, ein oder mehrere Haftvermittler aus der Gruppe aus der Silane, insbesondere Aminosilane wie 3-Aminopropyl-trimethoxysilan, 3-Aminopropyl-dimethoxy-methylsilan, N-(2-Aminoethyl)-3-aminopropyl-trimethoxysilan, N-(2-Amino-ethyl)-3-aminopropyl-methyldimethoxysilan, N-(2-Aminoethyl)-N'-[3-(trimethoxysilyl)propyl]ethylendiamin sowie deren Analoga mit Ethoxy-oder Isopropoxy anstelle der Methoxygruppen am Silizium, Aminosilane mit sekundären Aminogruppen, wie insbesondere N-Phenyl-, N-Cyclohexyl- und N-Alkylaminosilane, weiterhin Mercaptosilane, Epoxysilane, (Meth)acrylosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(tri-methoxysilyl)propyl]ethylendiamin, 3-Mercaptopropyltrimethoxysilan, 3-Ureidopropyltrimethoxysilan und die entsprechenden, Silane mit Ethoxygruppen anstelle der Methoxygruppen, sowie oligomere Formen dieser Silane, ein oder mehrere Feuchtigkeitsfänger aus der Gruppe aus Silane insbesondere Tetraethoxysilan, Vinyltrimethoxy- oder Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe, ein oder mehrere Weichmacher aus der Gruppe aus Carbonsäureester wie Phthalate, insbesondere 1,2-Cyclohexandicarbonsäurediisononylester, Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, Citrate, insbesondere Triethylcitrat, organische Phosphor- und Sulfonsäureester, Polybutene oder von natürlichen Fetten oder Ölen abgeleitete Fettsäuremethyl- oder - ethylester., ein oder mehrere UV-Stabilisatoren aus der Gruppe aus organischen (Benzophenone, Benzotriazole, Oxalanilide, Phenyltriazine) und anorganischen (Titandioxid, Eisenoxid, Zinkoxid) UV-Absorber sowie Antioxidantien aus der Gruppe der sterisch gehinderten Phenole, Amine und Phosphite und Phosphonite, ein oder mehrere Thixotropiermittel aus der Gruppe aus Schichtsilikaten wie Bentonite, Derivaten von Rizinusöl, hydriertes Rizinusöl, Polyamide, Polyurethane, Harnstoffverbindungen, pyrogene Kieselsäuren, Celluloseether oder hydrophob modifizierte Polyoxyethylene, ein oder mehrere Benetzungsmittel aus der Gruppe aus nichtionischen, anionischen und kationischen Tensiden oder Kombinationen davon ausgewählt sind.

In einer weiteren bevorzugten Ausführungsform beinhaltet die erfindungsgemäße Zusammensetzung zusätzlich ein Wasserfänger, bevorzugt einen ein Vinylalkoxysilan, besonders bevorzugt Vinyltrimethoxysilan (VTMO). Dabei ist es stets möglich, dass die Alkoxysubstituenten (z. B. -methoxy oder -ethoxy) der Alkoxysilane in der Zusammensetzung mindestens eines silylierten Polymers (SiP) mit mindestens einem Wasserfänger untereinander austauschen können.

Ein bevorzugtes Verfahren zur Herstellung der Zusammensetzung umfasst die folgenden Schritte:
(i) Synthese eines Polymers bzw. eines silylierten Polymers (SiP) bei einer Temperatur <80 °C, bevorzugt bei <60 °C, insbesondere bevorzugt bei Raumtemperatur, durch Zusammenbringen von mind. einem hydroxyfunktionalisierten Polymer ausgewählt aus der Gruppe bestehend aus Polypropylendiolen, Polyesterpolyolen, oder Mischungen daraus, bevorzugt mit zahlenmittleren Molgewichten (Mn) von 500-35000 g/mol, besonders bevorzugt mit ca. 2000 g/mol oder ca. 19000 g/mol oder Mischungen davon mit ein oder mehreren Isocyanaten (Iso) ausgewählt aus der Gruppe bestehend aus 4,4'-Methylendiphenylisocyanat (4,4'-MDI), Isophorondiisocyanat (IPDI) oder Mischungen davon und/oder ein oder mehreren Isocyanato-Silanen (Iso-Si) ausgewählt aus der Gruppe bestehend aus 3-(Triethoxysilyl)methylisocyanat, 3-(Triethoxysilyl)propylisocyanat oder Mischungen davon, unter Verwendung einer Metall-Siloxan-Silanol(-at)-Verbindung insbesondere Heptaisobutyl POSS-Titanium(IV)-Ethoxid (TiPOSS), Heptaisobutyl POSS-Zinn(IV)-Ethoxid (SnPOSS) oder Mischungen davon,
(ii) optional das aus Schritt (i) erhaltene Polymer umsetzen mit einem Aminosilan (AmSi) ausgewählt aus der Gruppe aus N-[3-(Triethoxysilyl)propyl]butylamin, N-[3-(Triethoxysilyl)methyl]butylamin, N-(3-Triethoxysilyl-propyl)-amino-bernsteinsäure-diethylester oder Mischungen davon zum silylierten Polymer (SiP) umgesetzt wird,
(iii) optional versetzen des silylierten Polymers (SiP) aus Schritt (i) bzw. (ii) mit einem weiteren Katalysator ausgewählt aus Dibutylzinndilaurat (DBTL), Heptaisobutyl POSS-Titanium(IV)-Ethoxid (TiPOSS), Heptaisobutyl POSS-Zinn(IV)-Ethoxid (SnPOSS) oder Mischungen davon, bevorzugt Heptaisobutyl POSS-Titanium(IV)-Ethoxid (TiPOSS).

Bei der erfindungsgemäßen Herstellung der silylierten Polymere (SiP) wird vorzugsweise zunächst entweder die gesamte Isocyanathaltige Verbindung (Komponente B) oder aber die gesamte isocyanatreaktive Verbindung, insbesondere das hydroxyfunktionalisierte Polymer (Komponente A) vorgelegt, anschließend die jeweils andere Komponente A bzw. B zugegeben, nachfolgend mit mindestens einer Metall-Siloxan-Silanol(-at)-Verbindung versetzt und die Komponenten miteinander reagieren gelassen. Aus dem dabei resultierenden Zwischenprodukt wird optional anschließend durch eine Reaktion mit dem Aminosilan (AmSi) das Endprodukt hergestellt. Wenn zusätzlich noch eine oder mehrere Komponenten eingesetzt werden, können diese prinzipiell zu jedem beliebigen Zeitpunkt der Reaktionsmischung zugegeben werden.

Das erfindungsgemäße Verfahren wird vorzugsweise bei Temperaturen von mindestens 0 °C, besonders bevorzugt mindestens 20 °C und vorzugsweise höchstens 150 °C, insbesondere höchstens 80 °C, durchgeführt.

Das erfindungsgemäße Verfahren wird bevorzugt unter Ausschluss von (Luft-)Feuchtigkeit und beim Druck der umgebenden Atmosphäre, also etwa 900 bis 1100 hPa, durchgeführt.

Das erfindungsgemäße Verfahren kann kontinuierlich, z. B. in einem Rohrreaktor oder Röhrenreaktor mit mehreren neben- oder auch hintereinander liegenden Dosierstellen, oder diskontinuierlich, z. B. in einem herkömmlichen Reaktionskessel mit Rührwerk, erfolgen.

### Besonders bevorzugte Ausführungsformen der Erfindung

**1.** Zusammensetzung enthaltend mindestens ein silyliertes Polymer (SiP) und mindestens zwei Katalysatoren A und B, wobei der Katalysator A aus der Gruppe der Metall-Siloxan-Silanol(-at)-Verbindungen ausgewählt ist.
**2.** Zusammensetzung nach Ausführungsform 1, **dadurch gekennzeichnet, dass** der Katalysator A ausgewählt ist aus der Gruppe der Metall-Siloxan-Silanol(-at)-Verbindungen, vorzugsweise, dass der Katalysator A Heptaisobutyl POSS-Titanium(IV)-Ethoxid (TiPOSS) ist, und der Katalysator B ebenfalls ausgewählt ist aus der Gruppe der Metall-Siloxan-Silanol(-at)-Verbindungen.
**3.** Zusammensetzung nach Ausführungsform 1 oder 2, **dadurch gekennzeichnet, dass** der Katalysator A Heptaisobutyl POSS-Titanium(IV)-Ethoxid (TiPOSS) und der Katalysator B Heptaisobutyl POSS-Zinn(IV)-Ethoxid (SnPOSS) ist.
**4.** Zusammensetzung nach Ausführungsform 1, dadurch gekennzeichnet, dass der Katalysator B ausgewählt ist aus einer Gruppe von Katalysatoren, die Metall-Siloxan-Silanol(-at)-Verbindungen nicht umfasst.
**5.** Zusammensetzung nach Ausführungsform 4, **dadurch gekennzeichnet, dass** der Katalysator B ausgewählt ist aus der Gruppe von metall-organischen Verbindungen.
**6.** Zusammensetzung nach Ausführungsform 5, **dadurch gekennzeichnet, dass** der Katalysator B ausgewählt ist aus der Gruppe von zinn- oder titanorganischen Verbindungen.
**7.** Zusammensetzung nach einer der Ausführungsformen 4 bis 6, **dadurch gekennzeichnet, dass** der Katalysator B ausgewählt ist aus der Gruppe bestehend aus Tetraalkyltitanaten, wie Tetramethyltitanat, Tetraethyltitanat, Tetra-n-propyltitanat, Tetra-isopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ((RO)₂TiO₂, worin R z.B. für iso-Propyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butylbis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminiumtrisbutylat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylmercaptide, Dibutylmercaptide, Dioctylmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodekanoat, Gemische aus Bismut- und Zinkcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen, Amin-Verbindungen wie Butylamin, Octylamin, Dibutylamin, Monoethanolamin, Diethanolamin, Triethanolamin, Diethylentriamin, Oleylamin, Cyclohexylamin, Benzylamin, Diethylaminopropylamin, Xylylendiamin, Triethylendiamin, Guanidin, Diphenylguanidin, 2,4,6,-Tris)dimethylaminomethyl)phenol, Morpholin, N-Methylmorpholin, 2-Ethyl-4-Methylimidazol und 1,8-Diazabicylo(5.4.0)undecen-7 (DBU), Salze dieser Amine mit Carbonsäuren oder anderen Säuren oder Mischungen davon.
**8.** Zusammensetzung nach Ausführungsform 7, **dadurch gekennzeichnet, dass** der Katalysator B ausgewählt ist aus der Gruppe bestehend aus Dibutylzinndilaurat (DBTL), Zinn(II)-2-ethylhexanoat (Zinnoctoat), Zink(II)-2-ethylhexanoat, Zink(II)-neodekanoat, Bismut(III)-tris(2-ethylhexonat), Bismut(III)-tris(neodecanoat) oder Mischungen davon.
**9.** Zusammensetzung nach Ausführungsform 7 oder 8, **dadurch gekennzeichnet, dass** es sich bei dem Katalysator B um Dibutylzinndilaurat (DBTL) handelt.
**10.** Zusammensetzung nach einer der Ausführungsformen 4 bis 8, **dadurch gekennzeichnet, dass** der Katalysator A ausgewählt ist aus der Gruppe bestehend aus Heptaisobutyl POSS-Titanium(IV)-Ethoxid (TiPOSS) und Heptaisobutyl POSS-Zinn(IV)-Ethoxid (SnPOSS) ist, vorzugsweise dass der Katalysator Heptaisobutyl POSS-Titanium(IV)-Ethoxid (TiPOSS) ist.
**11.** Zusammensetzung nach Ausführungsform 10, dadurch gekennzeichnet, dass darin mehr als ein Katalysator A aus der Gruppe Metall-Siloxan-Silanol(-at)-Verbindungen enthalten ist.
**12.** Zusammensetzung nach einer der vorherigen Ausführungsformen, **dadurch gekennzeichnet, dass** der Katalysator A als Monomer, Oligomer und/oder als Polymer vorliegt, wobei das Metall oder die Metalle endständig und/oder innerhalb der Kette vorhanden sind.
**13.** Zusammensetzung nach Ausführungsform 12, **dadurch gekennzeichnet, dass** die Metall-Siloxan-Silanol(-at)-Verbindung die allgemeine Formel R*_{q}SiᵣOₛMₜ aufweist, wobei jeder R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl, - OH und -O-(C1- bis C10-Alkyl), jedes M unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
   q eine ganze Zahl von 4 bis 19 ist,
   r eine ganze Zahl von 4 bis 10 ist,
   s eine ganze Zahl von 8 bis 30 ist, und
   t eine ganze Zahl von 1 bis 8 ist.
**14.** Zusammensetzung nach einer der vorherigen Ausführungsformen **dadurch gekennzeichnet, dass** die Metall-Siloxan-Silanol(-at)-Verbindung eine allgemeinen Struktur (I) aufweist, 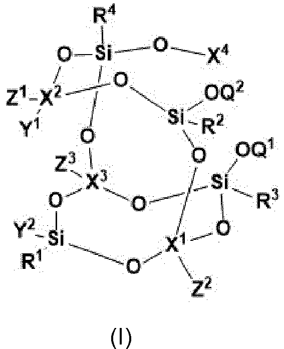 wobei
   X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen,
   insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
   R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
   Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M² ausgewählt ist aus der Gruppe bestehend aus s und p Block Metallen, d und f Block Übergangsmetallen, Lanthanid- und Actinidmetallen und Halbmetallen,
   insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
   X⁴-M³L¹_{Δ} oder M³ bedeutet und Q¹ und Q² H oder jeweils eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen,
   insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, oder
   X⁴ -m³L¹_{Δ} bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen,
   insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,
   oder
   X⁴, Q¹ und Q² unabhängig voneinander -M³L¹_{Δ} bedeuten,
   oder
   X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet,
   oder
   X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.
**15.** Zusammensetzung nach einer der vorherigen Ausführungsformen **dadurch gekennzeichnet, dass** die Metall-Siloxan-Silanol(-at)-Verbindung die Strukturformel (II) 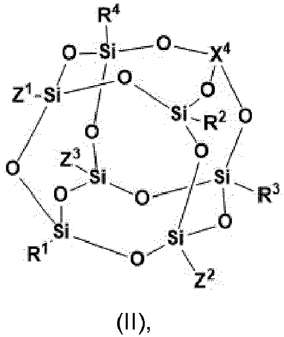 aufweist, wobei X⁴, R¹, R², R³, R⁴, Z¹, Z² und Z³ gemäß Ausführungsform 4 definiert sind.
**16.** Zusammensetzung nach Ausführungsform 15 **dadurch gekennzeichnet, dass** die Metall-Siloxan-Silanol(-at)-Verbindung der Struktur (IV) ein Metall-Silsequioxan ist, 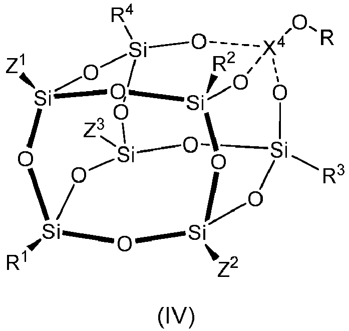 wobei
   - X⁴ ausgewählt aus der Gruppe ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti und Sn, ganz besonders bevorzugt Ti ist, und
   - X⁴ mit OR verknüpft ist, wobei R ausgewählt ist aus der Gruppe bestehend aus - H, -Methyl, -Ethyl, -Propyl, -Butyl, -Octyl, -Isopropyl, und -Isobutyl, Z¹, Z² und Z³ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und R¹, R², R³ und R⁴ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.
**17.** Zusammensetzung nach Ausführungsform 16 **dadurch gekennzeichnet, dass** die Metall-Siloxan-Silanol(-at)-Verbindung ein Metall-Silsequioxan der Struktur (IVb) ist, 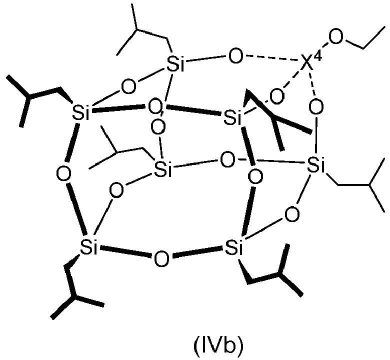 wobei X⁴ ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti (ergo Heptaisobutyl POSS-Titanium(IV)-Ethoxid (TiPOSS) ist) und Sn (ergo Heptaisobutyl POSS-Zinn(IV)-Ethoxid (SnPOSS) ist), ganz besonders bevorzugt Ti (ergo Heptaisobutyl POSS-Titanium(IV)-Ethoxid (TiPOSS)ist) ist.
**18.** Zusammensetzung nach einer der vorherigen Ausführungsformen, **dadurch gekennzeichnet, dass** das silylierte Polymer (SiP) erhältlich ist durch eine durch eine Metall-Siloxan-Silanol(-at)-Verbindung katalysierte Synthese von mindestens einer isocyanatreaktiven Verbindung, insbesondere mindestens einem hydroxyfunktionalisierten Polymer (Komponente A) und einer oder mehreren mindestens eine Isocyanat-Gruppe aufweisenden Verbindung (Komponente B).
**19.** Zusammensetzung nach Ausführungsform 18, **dadurch gekennzeichnet, dass** die Metall-Siloxan-Silanol(-at)-Verbindung zur katalysierte Synthese der Komponente A und der Komponente B definiert ist nach einer der Ausführungsformen 11 bis 16, insbesondere, dass es sich dabei um das Heptaisobutyl POSS-Titanium(IV)-Ethoxid (TiPOSS) und/oder Heptaisobutyl POSS-Zinn(IV)-Ethoxid (SnPOSS) handelt, vorzugsweise um das Heptaisobutyl POSS-Titanium(IV)-Ethoxid (TiPOSS).
**20.** Zusammensetzung nach einer der vorherigen Ausführungsformen **dadurch gekennzeichnet, dass** das Polymerrückgrat (P) des silylierten Polymers (SiP) Bestandteile aufweist ausgewählt aus der Gruppe bestehend aus Polyurethanen, Polyharnstoffen, Polyethern, Polyestern, Phenolharzen, Polyalkylenen, Poly(meth)acrylaten, Polyamiden, Polycaprolactonen, Polybutadiene oder Polyisoprene sowie Polycarbonaten oder Mischungen davon, bevorzugt aus der Gruppe bestehend aus Polyurethanen, Polyharnstoffen, Poly(meth)acrylaten oder Polyethern oder Mischungen davon, ganz besonders bevorzugt Polyether.
**21.** Zusammensetzung nach einer der vorherigen Ausführungsformen **dadurch gekennzeichnet, dass** das silylierte Polymer (SiP) mindestens zwei Endgruppen der allgemeinen Formel (V), 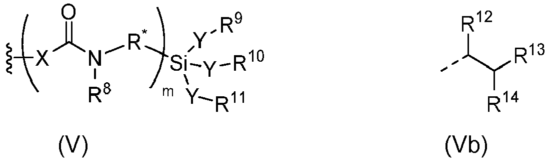 wobei
   - X C, Si oder ein Heteroatom ist und diese je nach ihrer Bindigkeit optional ein oder mehrere Reste R⁸ aufweisen, bevorzugt C, N, O, P, S, besonders bevorzugt C, N oder O, ganz besonders bevorzugt N oder O ist und jeweils an ein Kohlenstoff im Polymerrückgrat gebunden ist,
   - R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
   - jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet,
   - R⁸ H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine optional substituierte C4- bis C14-Cycloalkylgruppe oder eine optional substituierte C4- bis C14-Arylgruppe bedeutet oder einen Rest der allgemeinen Struktur (Vb) bedeutet,
   - R¹² und R¹⁴ jeweils unabhängig voneinander für H oder einen Rest aus der Gruppe bestehend aus -R¹⁵, -COOR¹⁵ und -CN,
   - R¹³ für H oder für einen Rest aus der Gruppe bestehend aus -CH₂-COOR¹⁵, - COOR¹⁵, -CONHR¹⁵, -CON(R¹⁵), -CN, -NO₂, -PO(OR¹⁵)₂, -SOR¹⁵ und -SO₂OR¹⁵,
   - R¹⁵ für einen gegebenenfalls mindestens ein Heteroatom aufweisenden, Kohlenwasserstoffrest mit 1 bis 20 C-Atomen,
   - R⁹, R¹⁰ und R¹¹ unabhängig voneinander H, eine optional substituierte, geradkettige oder verzweigte C1- bis C5-Alkylgruppe, eine optional substituierte, geradkettige oder verzweigte C2- bis C10-Alkenylgruppe oder eine optional substituierte C4- bis C14-Cycloalkylgruppe oder eine optional substituierte C4-bis C14-Arylgruppe bedeutet,
   - m 0 oder 1 ist und wenn m = 0 ist, ist das Si-Atom direkt an ein Kohlenstoff im Polymerrückgrat (P) gebunden.
**22.** Zusammensetzung nach Ausführungsform 21 **dadurch gekennzeichnet, dass** das silylierte Polymer (SiP) ein Polyether-Polymerrückgrat aufweist mit mindestens zwei Endgruppen der allgemeinen Formel (V), 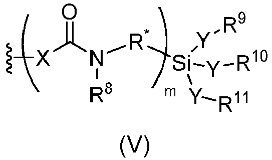 wobei
   - X N oder O ist und N optional ein Rest R⁸ aufweist,
   - R* 0 oder eine optional substituierte, geradkettige oder verzweigte C1- bis C20-Alkylgruppe oder eine optional substituierte C4- bis C12-Cycloalkylgruppe oder eine optional substituierte C4- bis C12-Arylgruppe, bevorzugt eine optional substituierte, geradkettige oder verzweigte C1- bis C15-Alkylgruppe bedeutet und wenn R* = 0 ist, ist das Si-Atom direkt mit dem N-Atom verbunden,
   - Y in Y-R⁹ und Y-R¹⁰ O bedeuten und das Y in Y-R¹¹ entweder O oder eine direkte Bindung des Si-Atoms mit dem jeweiligen Rest R¹¹ bedeutet, bevorzugt mindestens ein Y O bedeutet,
   - R⁸ H, eine optional substituierte, geradkettige oder verzweigte C1- bis C10-Alkylgruppe, eine optional substituierte, geradkettige oder verzweigte C2- bis C10-Alkenylgruppe oder eine optional substituierte, geradkettige oder verzweigte C2- bis C10-Alkinylgruppe, eine optional substituierte C4- bis C10-Cycloalkylgruppe oder eine optional substituierte C4- bis C10-Arylgruppe oder ein Bernsteinsäurederivat nach der allgemeinen Struktur (Vb) nach Ausführungsform 9 bedeutet,
   - R⁹, R¹⁰ und R¹¹ unabhängig voneinander H, eine optional substituierte, geradkettige oder verzweigte C1- bis C4-Alkylgruppe, eine optional substituierte, geradkettige oder verzweigte C2- bis C5-Alkenylgruppe oder eine optional substituierte C4- bis C10-Cycloalkylgruppe oder eine optional substituierte C4- bis C10-Arylgruppe bedeutet, bevorzugt unabhängig voneinander H oder eine C1- bis C2-Alkylgruppe ist und
   - m 0 oder 1 ist und wenn m = 0 ist, ist das Si-Atom direkt an ein Kohlenstoff im Polymerrückgrat (P) gebunden, bevorzugt m = 1 ist.
**23.** Zusammensetzung nach Ausführungsform 22 **dadurch gekennzeichnet, dass** das silylierte Polymer (SiP) ein Polyether-Polymerrückgrat aufweist mit mindestens zwei Endgruppen der allgemeinen Formel (V), 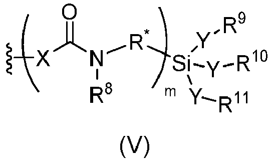 wobei
   - R* 0 oder eine optional substituierte, geradkettige oder verzweigte C1- bis C15-Alkylgruppe oder eine optional substituierte C4- bis C6-Cycloalkylgruppe oder eine optional substituierte C4- bis C6-Arylgruppe, bevorzugt eine optional substituierte, geradkettige oder verzweigte C1- bis C10-Alkylgruppe bedeutet, besonders bevorzugt eine C1-Alkylgruppe (= alpha-Silan) oder eine C3-Alkylgruppe (= gamma-Silan) ist und wenn R* = 0 ist, ist das Si-Atom direkt mit dem N-Atom verbunden,
   - R⁸ H, eine optional substituierte, geradkettige oder verzweigte C1- bis C8-Alkylgruppe, eine optional substituierte, geradkettige oder verzweigte C2- bis C8-Alkenylgruppe oder eine optional substituierte, geradkettige oder verzweigte C2-bis C8-Alkinylgruppe, eine optional substituierte C4- bis C6-Cycloalkylgruppe oder eine optional substituierte C4- bis C6-Arylgruppe bedeutet,
   - R⁹, R¹⁰ und R¹¹ unabhängig voneinander H, eine optional substituierte, geradkettige oder verzweigte C1- bis C4-Alkylgruppe, eine optional substituierte, geradkettige oder verzweigte C2- bis C5-Alkenylgruppe oder eine optional substituierte C4- bis C6-Cycloalkylgruppe oder eine optional substituierte C4- bis C6-Arylgruppe bedeutet, bevorzugt unabhängig voneinander H oder eine C1- bis C2-Alkylgruppe ist und
   - m 0 oder 1 ist und wenn m = 0 ist, ist das Si-Atom direkt an ein Kohlenstoff im Polymerrückgrat (P) gebunden, bevorzugt m = 1 ist.
**24.** Zusammensetzung nach einer der Ausführungsformen 18 bis 23, **dadurch gekennzeichnet, dass** das hydroxyfunktionalisierte Polymer ausgewählt ist aus der Gruppe bestehend aus Polyoxyalkylendiole oder Polyoxyalkylentriole, insbesondere Polyoxyethylen- und Polyoxypropylendi- und -triole, Polyole höher Funktionalität wie Sorbitol, Petaerythrit gestartete Polyole, Ethylenoxid-terminierte Polyoxypropylenpolyole, Polyesterpolyole, Styrol-Acrylnitril, Acryl-Methacrylat, (Poly)harnstoff gepfropfte oder enthaltende Polyetherpolyole, Polycarbonatpolyole, CO₂-Polyole, Polyhydroxyfunktionelle Fette und Öle, insbesondere Rizinusöl, Polykohlenwasserstoffpolyole wie Dihydroxypolybutadien, Polytetrahydrofuran basierte Polyether (PTMEG), OH-terminierte Prepolymere auf der Basis der Reaktion eines Polyether- oder Polyesterols mit einem Diisocyanat, Polypropylendiole, Polyesterpolyole oder Mischungen daraus, bevorzugt Polypropylendiole, Polyesterpolyole, oder Mischungen daraus.
**25.** Zusammensetzung nach Ausführungsform 24 **dadurch gekennzeichnet, dass** das hydroxyfunktionalisierte Polymer ausgewählt ist aus der Gruppe bestehend aus Polyoxyalkylendiole, Polyoxyalkylentriole, insbesondere Polyoxyethylen- und/oder Polyoxypropylendi- und/oder -triole, KOH-katalysierten hydroxyfunktionalisierten Polyethern oder Doppelmetall-Cyanidkomplex-(DMC)-katalysierten hydroxyfunktionalisierten Polyethern oder Mischungen daraus, bevorzugt oder Mischungen daraus.
**26.** Zusammensetzung nach einer der vorherigen Ausführungsformen 18 bis 24, **dadurch gekennzeichnet, dass** die Komponente B ausgewählt ist aus der Gruppe bestehend aus aromatischen und/oder aliphatischen Isocyanaten (Iso) der allgemeinen Struktur (VI) oder Mischungen daraus oder Isocyanato-Silanen (Iso-Si) der allgemeinen Struktur (VII) oder Mischungen daraus, 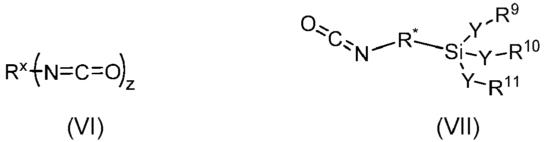 wobei
   - R^{x} eine Kohlenstoff-haltige Gruppe bedeutet, bevorzugt mindestens eine aromatische oder aliphatische Gruppe oder Mischungen davon bedeutet, besonders bevorzugt eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine optional substituierte C4- bis C14-Cycloalkylgruppe oder eine optional substituierte C4-bis C14-Arylgruppe bedeutet, ganz besonders bevorzugt Diphenylmethan, Toluol, Dicylohexylmethan, Hexan oder Methyl-3,5,5-trimethylcyclohexyl bedeutet,
   - jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet,
   - z mindestens 1 ist, bevorzugt mindestens 2 ist,
   - R⁹, R¹⁰ und R¹¹ unabhängig voneinander H, eine optional substituierte, geradkettige oder verzweigte C1- bis C5-Alkylgruppe, eine optional substituierte, geradkettige oder verzweigte C2- bis C10-Alkenylgruppe oder eine optional substituierte C4- bis C8-Cycloalkylgruppe oder eine optional substituierte C4- bis C8-Arylgruppe bedeutet und
   - R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden.
**27.** Zusammensetzung nach einer der Ausführungsformen 18 bis 26, **dadurch gekennzeichnet, dass** die Komponente B ausgewählt ist aus der Gruppe bestehend aus aromatischen und/oder aliphatischen Isocyanaten (Iso) der allgemeinen Struktur (VI) oder Mischungen daraus oder Isocyanato-Silanen (Iso-Si) der allgemeinen Struktur (VII) oder Mischungen daraus, 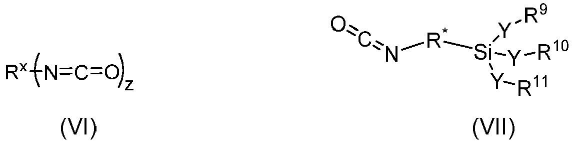 wobei
   - R^{x} Diphenylmethan, Toluol, Dicylohexylmethan, Hexan oder Methyl-3,5,5-trimethylcyclohexyl bedeutet, bevorzugt Diphenylmethan oder Hexan oder Methyl-3,5,5-trimethylcyclohexyl bedeutet, ganz besonders bevorzugt Diphenylmethan oder Methyl-3,5,5-trimethylcyclohexyl bedeutet und
   - z mindestens 2 ist, bevorzugt 2 ist,
   - Y in Y-R⁹ und Y-R¹⁰ O bedeuten und das Y in Y-R¹¹ entweder O oder eine direkte Bindung des Si-Atoms mit dem jeweiligen Rest R¹¹ bedeutet, bevorzugt mindestens ein Y O bedeutet,
   - R⁹, R¹⁰ und R¹¹ unabhängig voneinander H, eine optional substituierte, geradkettige oder verzweigte C1- bis C3-Alkylgruppe bedeutet sowie
   - R* 0 oder eine optional substituierte, geradkettige oder verzweigte C1- bis C15-Alkylgruppe oder eine optional substituierte C4- bis C6-Cycloalkylgruppe oder eine optional substituierte C4- bis C6-Arylgruppe, bevorzugt eine optional substituierte, geradkettige oder verzweigte C1- bis C10-Alkylgruppe bedeutet, besonders bevorzugt eine C1-Alkylgruppe (= alpha-Silan) oder eine C3-Alkylgruppe (= gamma-Silan) ist und wenn R* = 0 ist, ist das Si-Atom direkt mit dem N-Atom verbunden.
**28.** Zusammensetzung nach Ausführungsform 27 **dadurch gekennzeichnet, dass** mindestens ein Isocyanat (Iso) der allgemeinen Struktur (VI) ausgewählt ist aus der Gruppe bestehend aus polymerem, oligomerem oder monomerem Methylendiphenylisocyanat (MDI), insbesondere von 4,4'-Methylendiphenylisocyanat (4,4'-MDI), 2,4'-Methylendiphenylisocyanat (2,4'-MDI), 2,2'-Methylendiphenylisocyanat (2,2'-MDI), 4,4'-Diisocyanatodicyclohexylmethan (H₁₂MDI), 2-Methylpentamethylen-1,5-diisocyanat, 1,12-Dodecamethylendiisocyanat, Lysin-und Lysinesterdiisocyanat, Cyclohexan-1,3-diisocyanat, Cyclohexan-1,4-diisocyanat, Perhydro-2,4'-diphenylmethandiisocyanat, Perhydro-4,4'-diphenylmethandiisocyanat, 1,4-Diisocyanato-2,2,6-trimethylcyclohexan (TMCDI), 3-Isocyanatmethyl-3,5,5-trimethylcyclohexylisocyanat (= Isophorondiisocyanat oder IPDI), 1,6-Hexamethylendiisocyanat (HDI) oder das Trimer daraus (HDI-Trimer), 2,2,4-Trimethyl-1,6-hexamethylendiisocyanat und/oder 2,4,4- 1,4-Bis-(isocyanat)cyclohexan, 1,4-Bis-(isocyanat)benzol (PPDI), 1,3- und/oder 1,4-Bis-(isocyanatomethyl)-cyclohexan, m- und/oder p-Xylylendiisocyanat (m- und/oder p-XDI), m- und/oder p-Tetramethyl-1,3-xylylendiisocyanat, m- und/oder p-Tetramethyl-1,4-xylylendiisocyanat, Bis-(1-Isocyanato-1-methylethyl)-naphthalin, 1,3-Bis(isocyanat-4-methyl-phenyl)-2,4-dioxo-1,3-diazetidin, Naphthalin-1,5-diisocyanat (NDI), 3,3'-Dimethyl-4,4'-diisocyanatodiphenyl (TODI), 2,4- und/oder 2,6-Toluylendiisocyanat (TDI), 1,3-Bis(isocyanatmethyl)benzol oder Mischungen davon, bevorzugt 4,4'-Methylendiphenylisocyanat (4,4'-MDI) oder Isophorondiisocyanat (IPDI), 1,6-Hexamethylendiisocyanat (HDI) oder das Trimer daraus (HDI-Trimer) oder Mischungen davon, ganz besonders bevorzugt 4,4'-Methylendiphenylisocyanat (4,4'-MDI) oder Isophorondiisocyanat (IPDI) oder Mischungen davon.
**29.** Zusammensetzung nach Ausführungsform 27 **dadurch gekennzeichnet, dass** mindestens ein Isocyanato-Silan (Iso-Si) der allgemeinen Struktur (VII) ausgewählt ist oder Mischungen davon, 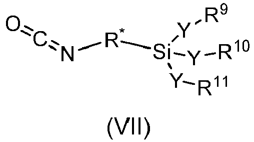 wobei R⁹, R¹⁰, R¹¹ und R* nach Ausführungsform 14 oder 15 definiert sind, bevorzugt R⁹, R¹⁰, R¹¹ eine Methyl- oder Ethylgruppe oder Mischungen davon sind, bevorzugt ausgewählt ist aus der Gruppe bestehend aus 3-(Triethoxysilyl)methylisocyanat, 3-(Trimethoxysilyl) methylisocyanat, 3-(Triethoxysilyl)ethylisocyanat, 3-(Trimethoxysilyl)ethylisocyanat 3-(Triethoxysilyl)propylisocyanat, 3-(Trimethoxysilyl)propylisocyanat, 3-(Triethoxysilyl) butylisocyanat, 3-(Trimethoxysilyl)butylisocyanat, 3-(Triethoxysilyl)pentylisocyanat 3-(Trimethoxysilyl)pentylisocyanat, 3-(Triethoxysilyl)hexylisocyanat, 3-(Trimethoxysilyl)hexylisocyanat oder Mischungen davon, bevorzugt 3-(Trimethoxysilyl)methylisocyanat, 3-(Triethoxysilyl)methylisocyanat, 3-(Trimethoxysilyl)propylisocyanat, 3-(Triethoxysilyl)propylisocyanat oder Mischungen davon, besonders bevorzugt 3-(Trimethoxysilyl)propylisocyanat, 3-(Triethoxysilyl)propylisocyanat, oder Mischungen davon.
**30.** Zusammensetzung nach einer der vorherigen Ausführungsformen **dadurch gekennzeichnet, dass** das silyliertes Polymer (SiP) durch Umsetzung mit einem Aminosilan (AmSi) hergestellt ist.
**31.** Zusammensetzung nach Ausführungsform 30, **dadurch gekennzeichnet, dass** mindestens ein Aminosilan (AmSi) der allgemeinen Struktur (VIII) ausgewählt ist oder eine Mischung davon ist, 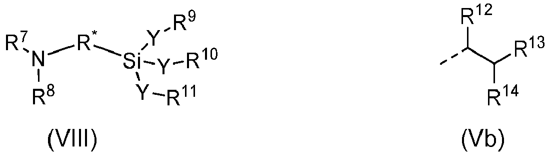 wobei
   - R⁷ H ist,
   - R⁸ H, eine optional substituierte, geradkettige oder verzweigte C1- bis C25-Alkylgruppe, eine optional substituierte, geradkettige oder verzweigte C2- bis C25-Alkenylgruppe oder eine optional substituierte C4- bis C18-Cycloalkylgruppe oder eine optional substituierte C4- bis C18-Arylgruppe oder einen Rest der allgemeinen Struktur (Vb) bedeutet,
   - R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
   - R¹² und R¹⁴ jeweils unabhängig voneinander für H oder einen Rest aus der Gruppe bestehend aus -R¹⁵, -COOR¹⁵ und -CN,
   - R¹³ für H oder für einen Rest aus der Gruppe bestehend aus -CH₂-COOR¹⁵, -COOR¹⁵, -CONHR¹⁵, -CON(R¹⁵), -CN, -NO₂, -PO(OR¹⁵)₂, -SOR¹⁵ und -SO₂OR¹⁵,
   - R¹⁵ für einen gegebenenfalls mindestens ein Heteroatom aufweisenden, Kohlenwasserstoffrest mit 1 bis 20 C-Atomen,
   - R⁹, R¹⁰, R¹¹ und R* nach Ausführungsform 22 oder 23 definiert sind und
   - jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet.
**32.** Zusammensetzung nach Ausführungsform 31, **dadurch gekennzeichnet, dass** mindestens ein Aminosilan (AmSi) der allgemeinen Struktur (VIII) ausgewählt ist oder eine Mischung davon ist, 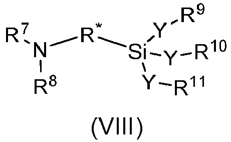 wobei
   - R⁸ H, eine optional substituierte, geradkettige oder verzweigte C1- bis C10-Alkylgruppe, eine optional substituierte, geradkettige oder verzweigte C2- bis C10-Alkenylgruppe oder eine optional substituierte, geradkettige oder verzweigte C2- bis C10-Alkinylgruppe, eine optional substituierte C4- bis C10-Cycloalkylgruppe oder eine optional substituierte C4- bis C10-Arylgruppe oder ein Bernsteinsäurederivat nach der allgemeinen Struktur (Vb) nach Ausführungsform 19 bedeutet,
   - R* 0 oder eine optional substituierte, geradkettige oder verzweigte C1- bis C20-Alkylgruppe oder eine optional substituierte C4- bis C12-Cycloalkylgruppe oder eine optional substituierte C4- bis C12-Arylgruppe, bevorzugt eine optional substituierte, geradkettige oder verzweigte C1- bis C15-Alkylgruppe bedeutet, besonders bevorzugt eine C1-Alkylgruppe (= alpha-Silan) oder eine C3-Alkylgruppe (= gamma-Silan) ist und wenn R* = 0 ist, ist das Si-Atom direkt mit dem N-Atom verbunden,
   - R⁹, R¹⁰, R¹¹ nach Ausführungsform 22 oder 23 definiert sind, bevorzugt R⁹, R¹⁰, R¹¹ eine Methyl- oder Ethylgruppe oder Mischungen davon sind und
   - Y in Y-R⁹ und Y-R¹⁰ O bedeuten und das Y in Y-R¹¹ entweder O oder eine direkte Bindung des Si-Atoms mit dem jeweiligen Rest R¹¹ bedeutet.
**33.** Zusammensetzung nach einer der vorherigen Ausführungsformen 30 bis 32, **dadurch gekennzeichnet, dass** das Aminosilan (AmSi) der allgemeinen Struktur (VIII) ausgewählt aus der Gruppe aus N-[3-(Trimethoxysilyl)methyl]butylamin, N-[3-(Triethoxysilyl)methyl]butylamin, N-[3-(Trimethoxysilyl)ethyl]butylamin, N-[3-(Triethoxysilyl)ethyl]butylamin, N-[3-(Trimethoxysilyl)propyl]butylamin, N-[3-(Triethoxysilyl)propyl]butylamin, N-[3-(Trimethoxysilyl)butyl]butylamin, N-[3-(Triethoxysilyl)buyl]butylamin, N-[3-(Trimethoxysilyl)pentyl]butylamin, N-[3-(Triethoxysilyl)pentyll]butylamin, N-[3-(Trimethoxysilyl)hexyl]butylamin, N-[3-(Triethoxysilyl)hexyl]butylamin, 3-Aminopropyltrimethoxysilan, 3-Aminopropyltriethoxysilan, N-Cyclohexyl-3-aminopropyltrimethoxysilan, N-Cyclohexyl-3-aminopropyltriethoxysilan, N-(3-Trimethoxysilyl-propyl)-amino-bernsteinsäure-diethylester, N-(3-Triethoxysilyl-propyl)-amino-bernsteinsäure-diethylester oder eine Mischung davon ist, bevorzugt N-[3-(Trimethoxysilyl)methyl]butylamin, N-[3-(Triethoxysilyl)methyl]butylamin, N-[3-(Trimethoxysilyl)propyl]butylamin, N-[3-(Triethoxysilyl)propyl]butylamin, N-(3-Trimethoxysilyl-propyl)-amino-bernsteinsäure-diethylester, N-(3-Triethoxysilyl-propyl)-amino-bernsteinsäure-diethylester, besonders bevorzugt N-[3-(Trimethoxysilyl)propyl]butylamin, N-[3-(Triethoxysilyl)propyl]butylamin, N-[3-(Trimethoxysilyl)methyl]butylamin, N-[3-(Triethoxysilyl)methyl]butylamin, N-(3-Trimethoxysilyl-propyl)-amino-bernsteinsäure-diethylester, N-(3-Triethoxysilyl-propyl)-amino-bernsteinsäure-diethylester oder eine Mischung davon, ganz besonders bevorzugt N-(3-Triethoxysilyl-propyl)-amino-bernsteinsäure-diethylester, N-[3-(Triethoxysilyl)propyl]butylamin, N-[3-(Triethoxysilyl)methyl]butylamin oder eine Mischung davon.
**34.** Zusammensetzung nach einer der vorherigen Ausführungsformen 18 bis 33, **dadurch** gekennzeichnet, dass die Metall-Siloxan-Silanol(-at)-Verbindung zur katalysierten Synthese in einer molaren Konzentration im Bereich von 0,000001 bis 0,0001 mol/kg oder 0,0001 bis 0,1 mol/kg, insbesondere von 0,00001 bis 0,00005 mol/kg oder 0,001 bis 0,01 mol/kg, jeweils bezogen auf das Gesamtgewicht der Zusammensetzung, vorliegt.
**35.** Zusammensetzung nach einer der vorherigen Ausführungsformen 18 bis 34, **dadurch gekennzeichnet, dass** die Metall-Siloxan-Silanol(-at)-Verbindung zur katalysierten Synthese mit einem Gewichtsanteil von 0,001 bis 1,5 %, vorzugsweise von 0,002 bis 0,5 %, jeweils bezogen auf das Gesamtgewicht der Zusammensetzung, vorliegt.
**36.** Zusammensetzung nach einer der vorherigen Ausführungsformen **dadurch gekennzeichnet, dass** das silylierte Polymer (SiP) eine Viskosität im Bereich von 500 bis 100000 mPa·s aufweist, bevorzugt im Bereich von 2000 bis 25000 mPa·s aufweist.
**37.** Zusammensetzung nach einer der vorherigen Ausführungsformen **dadurch gekennzeichnet, dass** das silylierte Polymer (SiP) nach einer der vorherigen Ausführungsformen eine um > 5 % niedrigere Viskosität aufweist im Vergleich zu einem silylierten Polymer (SiP) hergestellt unter Dibutylzinndilaurat (DBTL)-Katalyse.
**38.** Zusammensetzung nach einer der vorherigen Ausführungsformen **dadurch gekennzeichnet, dass** das silylierte Polymer (SiP) eine zahlenmittlere Molmasse (Mn) zwischen 500 und 100000 g/mol aufweist.
**39.** Zusammensetzung nach einer der vorherigen Ausführungsformen **dadurch gekennzeichnet, dass** das silylierte Polymer (SiP) eine Molmassenverteilung (Mw/Mn) von ca. 1,6 oder kleiner aufweist.
**40.** Zusammensetzung nach einer der vorherigen Ausführungsformen **dadurch gekennzeichnet, dass** die Zusammensetzung feuchtigkeitshärtend ist, bevorzugt unter zusätzlicher Verwendung eines Katalysators.
**41.** Zusammensetzung nach einer der vorherigen Ausführungsformen **dadurch gekennzeichnet, dass** sie durch Luftfeuchtigkeitseinfluss und bei Raumtemperatur, im Bereich von 10-30 °C, bevorzugt im Bereich von 18-25 °C, besonders Bevorzugt bei 20 bis 23 °C aushärten kann.
**42.** Zusammensetzung nach einer der vorherigen Ausführungsformen, wobei die Zusammensetzung ferner ein oder mehrere Additive umfasst, die aus der Gruppe bestehend aus Füllstoff, Haftvermittler, Feuchtigkeitsfänger, Weichmacher, UV-Stabilisatoren, Thixotropiermittel, Benetzungsmittel oder Kombinationen davon ausgewählt sind, wobei vorzugsweise ein oder mehrere Additive ein Silan ist bzw. sind.
**43.** Zusammensetzung enthaltend die folgenden Komponenten oder erhältlich durch Zusammenbringen der folgenden Komponenten:
   2 bis 50 g silyliertes Polymer (SiP) definiert nach einer der vorstehenden Ausführungsformen,
   0 bis 35 g Weichmacher
   5 bis 65 g Kreide
   0 bis 15 g Titandioxid
   0 bis 5 g Wasserfänger
   0 bis 5 g Haftvermittler, sowie
   0 bis 2 g eines Katalysators nach einer der vorstehenden Ausführungsformen,
   jeweils bezogen auf das Gesamtgewicht der Zusammensetzung.
**44.** Zusammensetzung nach Ausführungsform 43 enthaltend die folgenden Komponenten oder erhältlich durch Zusammenbringen der folgenden Komponenten:
   10 bis 40 g silyliertes Polymer (SiP) definiert nach einer der vorstehenden Ausführungsformen,
   5 bis 30 g Weichmacher
   15 bis 55 g Kreide
   1 bis 10 g Titandioxid
   0,25 bis 3 g Wasserfänger
   0,25 bis 3 g Haftvermittler, sowie
   0 bis 1 g eines Katalysators nach einer der vorstehenden Ausführungsformen,
   jeweils bezogen auf das Gesamtgewicht der Zusammensetzung.
**45.** Zusammensetzung nach einer der Ausführungsformen 43 oder 44 enthaltend die folgenden Komponenten oder erhältlich durch Zusammenbringen der folgenden Komponenten:
   15 bis 35 g silyliertes Polymer (SiP) definiert nach einer der vorstehenden Ausführungsformen,
   10 bis 25 g Weichmacher
   25 bis 50 g Kreide
   1,5 bis 5 g Titandioxid
   0,5 bis 2 g Wasserfänger
   1 bis 2,5 g Haftvermittler, sowie
   0 bis 0,8 g eines Katalysators nach einer der vorstehenden Ausführungsformen,
   jeweils bezogen auf das Gesamtgewicht der Zusammensetzung.
**46.** Verfahren zur Herstellung der Zusammensetzung nach einer der vorherigen Ausführungsformen umfassend die folgenden Schritte:
   (i) Synthese eines Polymers durch Zusammenbringen von mind. einer isocyanatreaktiven Verbindung, insbesondere einem hydroxyfunktionalisierten Polymer nach Ausführungsform 24 oder 25 und mit ein oder mehreren Isocyanaten (Iso) nach Ausführungsform 26, 27 oder 28, oder ein oder mehreren Isocyanato-Silanen (Iso-Si) nach Ausführungsform 26, 27 oder 29 unter Verwendung einer Metall-Siloxan-Silanol(-at)-Verbindung nach einer der vorherigen Ausführungsformen, insbesondere Heptaisobutyl POSS-Titanium(IV)-Ethoxid (TiPOSS) nach Ausführungsform 16 oder 17, Heptaisobutyl POSS-Zinn (IV)-Ethoxid (SnPOSS) nach Ausführungsform 16 oder 17oder Mischungen davon,
   (ii) optional versetzen des Polymers aus Schritt (i) mit einem Katalysator ausgewählt aus Dibutylzinndilaurat (DBTL) oder einer Metall-Siloxan-Silanol(-at)-Verbindung nach einer der vorherigen Ausführungsformen, insbesondere Heptaisobutyl POSS-Titanium(IV)-Ethoxid (TiPOSS) nach Ausführungsform 16 oder 17, Heptaisobutyl POSS-Zinn(IV)-Ethoxid (SnPOSS) nach Ausführungsform 16 oder 17 oder Mischungen davon.
**47.** Verfahren zur Herstellung der Zusammensetzung nach einer der vorherigen Ausführungsformen umfassend die folgenden Schritte:
   (i) Synthese eines Polymers durch Zusammenbringen von mind. einem hydroxyfunktionalisierten Polymer ausgewählt aus der Gruppe bestehend aus hydroxyfunktionalisierten Polymeren nach Ausführungsform 24 oder 25 mit zahlenmittleren Molgewichten (Mn) von 500-35000 g/mol, bevorzugt mit ca. 2000 g/mol oder ca. 19000 g/mol oder Mischungen davon mit ein oder mehreren Isocyanaten (Iso) nach Ausführungsform 26, 27 oder 28 oder ein oder mehreren Isocyanato-Silanen (Iso-Si) nach Ausführungsform 26, 27 oder 29, bevorzugt 3-(Triethoxysilyl)methylisocyanat oder 3-(Triethoxysilyl)propylisocyanat oder Mischungen davon unter Verwendung einer Metall-Siloxan-Silanol(-at)-Verbindung nach einer der vorherigen Ausführungsformen, insbesondere Heptaisobutyl POSS-Titanium(IV)-Ethoxid (TiPOSS) nach Ausführungsform 16 oder 17, Heptaisobutyl POSS-Zinn (IV)-Ethoxid (SnPOSS) nach Ausführungsform 16 oder 17 oder Mischungen davon,
   (ii) optional versetzen des Polymers aus Schritt (i) mit einem Katalysator ausgewählt aus Dibutylzinndilaurat (DBTL) oder einer Metall-Siloxan-Silanol(-at)-Verbindung nach einer der vorherigen Ausführungsformen, insbesondere Heptaisobutyl POSS-Titanium(IV)-Ethoxid (TiPOSS) nach Ausführungsform 16 oder 17, Heptaisobutyl POSS-Zinn (IV)-Ethoxid (SnPOSS) nach Ausführungsform 16 oder 17 oder Mischungen davon.
**48.** Verfahren zur Herstellung der Zusammensetzung nach Ausführungsform 47 umfassend die folgenden Schritte:
   (i) Synthese eines Polymers bei einer Temperatur <80 °C, durch Zusammenbringen von mind. einem hydroxyfunktionalisierten Polymer ausgewählt aus der Gruppe bestehend aus hydroxyfunktionalisierten Polymeren nach Ausführungsform 24 oder 25 mit zahlenmittleren Molgewichten (Mn) von 500-35000 g/mol, bevorzugt mit ca. 2000 g/mol oder ca. 19000 g/mol oder Mischungen davon mit ein oder mehreren Isocyanaten (Iso) nach Ausführungsform 25, 26 oder 27 oder ein oder mehreren Isocyanato-Silanen (Iso-Si) nach Ausführungsform 26, 27 oder 29, bevorzugt 3-(Triethoxysilyl)methylisocyanat, 3-(Triethoxysilyl)propylisocyanat oder Mischungen davon unter Verwendung einer Metall-Siloxan-Silanol(-at)-Verbindung nach einer der vorherigen Ausführungsformen, insbesondere Heptaisobutyl POSS-Titanium(IV)-Ethoxid (TiPOSS) nach Ausführungsform 16 oder 17, Heptaisobutyl POSS-Zinn (IV)-Ethoxid (SnPOSS) nach Ausführungsform 16 oder 17 oder Mischungen davon,
   (ii) optional versetzen des Polymers aus Schritt (i) mit einem Katalysator ausgewählt aus Dibutylzinndilaurat (DBTL) oder einer Metall-Siloxan-Silanol(-at)-Verbindung nach einer der vorherigen Ausführungsformen, insbesondere Heptaisobutyl POSS-Titanium(IV)-Ethoxid (TiPOSS) nach Ausführungsform 16 oder 17, Heptaisobutyl POSS-Zinn (IV)-Ethoxid (SnPOSS) nach Ausführungsform 16 oder 17 oder Mischungen davon.
**49.** Verfahren zur Herstellung der Zusammensetzung nach Ausführungsform 46, 47 oder 48 **dadurch gekennzeichnet, dass** das jeweils aus Schritt (i) erhaltene Polymer mit einem Aminosilan (AmSi) nach Ausführungsform 31, 32 oder 33, bevorzugt mit N-[3-(Triethoxysilyl)propyl]butylamin, N-[3-(Trimethoxysilyl)propyl]butylamin, N-[3-(Triethoxysilyl)methyl]butylamin, N-[3-(Trimethoxysilyl)methyl]butylamin, N-(3-Trimethoxysilyl-propyl)-amino-bernsteinsäure-diethylester, N-(3-Triethoxysilyl-propyl)-amino-bernsteinsäure-diethylester oder Mischungen davon umgesetzt wird.
**50.** Verwendung der Zusammensetzung nach einer der vorherigen Ausführungsformen in CASE-Bereichen (Beschichtungen, Klebstoffe, Dichtungen und Elastomere).
**51.** Verwendung der Zusammensetzung nach einer der vorherigen Ausführungsformen in Kleb- und Dichtstoffen.

### Beispiele

### Beispiele I)

### Herstellung der für die Untersuchung benötigten Polymere:

Die folgenden Materialien wurden für die Herstellung der Prepolymere und silanterminierten Polymeren verwendet:
- 4,4'-Methylendiphenylisocyanat, Alfa Aesar
- IPDI Wanate IPDI, DKSH
- PolyU L 4000, (low monol Polyoxypropylendiol, OH-Zahl 27 mg KOH/g, Viskosität 1000 mPa*s), PolyU GmbH
- PolyU L 12000 (low monol Polyoxypropylendiol, OH-Zahl 10 mg KOH/g, Viskosität 6000 mPa*s), PolyU GmbH
- Maleinsäurediethylester, Acros Organics
- 3-Aminopropyl-trimethoxysilan, Alfa Aesar
- 3-Aminopropyl-triethoxysilan, Alfa Aesar
- 3-(Triethoxysilyl)propylisocyanat, Acros Organics
- 3-(Trimethoxysilyl)propylisocyanat, TCI
- DBTL Kosmos 19, Evonik, 20%ig, gelöst in Hexamoll DINCH, BASF
- TiPOSS, 20%ig, gelöst in Hexamoll DINCH, BASF
- Vinyltrimethoxysilan, VTMO, Acros Organics
- Vinyltriethoxysilan, VTEO, Alfa Aesar

### Herstellung von triethoxysilanterminierten (ESTP) und trimethoxysilanterminierten Polymeren (MSTP)

### A) Herstellung von triethoxysilanterminierten (ESTP) und trimethoxysilanterminierten Polymeren (MSTP) aus der Reaktion von MDI-Prepolymer mit N-(3-Triethoxysilyl-propyl)-amino-bernsteinsäure-diethylester bzw. N-(3-Trimethoxysilyl-propyl)-amino-bernsteinsäure-diethylester:

### A1) Synthese Triethoxysilanterminiertes Polymer (ESTP)

### Schritt 1; MDI-Prepolymersynthese: Reaktion von 4,4'-MDI mit PolyU L 4000 und TiPOSS als Katalysator

In einem Reaktionsgefäß wurden unter Stickstoffatmosphäre 31,3 g 4,4'-Methylendiphenylisocyanat bei 55°C geschmolzen und innerhalb 30 min. unter Rühren mit 250 g auf 50°C erwärmten PolyU L 4000 versetzt. Die Mischung wurde auf Raumtemperatur abgekühlt und mit 0,625 g einer 1%igen TiPOSS-Lösung (entsprechen 22 ppm TiPOSS) in DINCH versetzt. Nach 3 h Reaktionszeit bei Raumtemperatur wurde mittels Titration ein Gehalt an freien Isocyanatgruppen von 1,9 Gew. % (berechneter Wert 1,9 Gew.) erzielt. Die Viskosität des erhaltenen Prepolymers betrug 5000 mPa*s.

### Schritt 2, Synthese Aminosilansynthese: Reaktion von Maleinsäurediethylester mit 3-Aminopropyl-triethoxysilan

In einem Reaktionsgefäß wurden 50 g 3-Aminopropyl-triethoxysilan vorgelegt und bei Raumtemperatur mit 38,9 g Maleinsäurediethylester innerhalb von 30 min versetzt. Die Mischung wurde für weitere 12 h bei 80°C nachgerüht. 87 g N-(3-Triethoxysilyl-propyl)-amino-bernsteinsäure-diethylester wurden als wasserklare Flüssigkeit erhalten.

### Schritt 3, Synthese triethoxysilanterminiertes Polymer ESTP 1:

171.2 g MDI-Prepolymer mit 0,0038 g TiPOSS wurde unter Stickstoffatmosphäre bei Raumtemperatur mit 30 g N-(3-Triethoxysilyl-propyl)-amino-bernsteinsäure-diethylester unter Rühren versetzt. Die Reaktion war nach 2 h bei 80 °C beendet, es ließ sich kein freies Isocyanat mehr nachweisen. Die Viskosität des erhaltenen triethoxysilanterminierten Polymers ESTP 1 betrug 18000 mPa*s.

### A2) Vergleichsversuch zu A1; Synthese triethoxysilanterminiertes Polymer ESTP 2

Für einen Vergleich wurde die MDI-Prepolymer-Synthese Schritt 1 der Reaktionsfolge A1 unter Verwendung von 0,625 g einer 1%igen DBTL-Lösung in DINCH als Katalysator wiederholt. Die nachfolgenden Schritte wurden analog wie vorher beschrieben durchgeführt. Es wurde ein triethoxysilanterminiertes Polymer ESTP 2 mit der Viskosität 28000 mPa*s erhalten.

### A3) Trimethoxysilanterminierte Polymere (MSTP)

### Schritt 1; MDI-Prepolymersynthese: Reaktion von 4,4'-MDI mit PolyU L 4000 und TiPOSS als Katalysator

Wie unter A1 beschrieben.

### Schritt 2, Aminosilansynthese: Reaktion von Maleinsäurediethylester mit 3-Aminopropyl-trimethoxysilan

In einem Reaktionsgefäß wurden 51 g 3-Aminopropyl-trimethoxysilan vorgelegt und bei Raumtemperatur mit 49 g Maleinsäurediethylester innerhalb von 30 min versetzt. Die Mischung wurde bei Raumtemperatur für weitere 2 h nachgerüht. 97,8 g N-(3-Trimethoxysilyl-propyl)-amino-bernsteinsäure-diethylester wurden als wasserklare Flüssigkeit erhalten.

### Schritt 3, Synthese trimethoxysilanterminiertes Polymer MSTP 1:

240 g MDI-Prepolymer mit 0,006 g TiPOSS wurde unter Stickstoffatmosphäre bei Raumtemperatur mit 37,5 g N-(3-Trimethoxysilyl-propyl)-amino-bernsteinsäure-diethylester unter Rühren versetzt. Die Reaktion war nach 2 h beendet, es ließ sich kein freies Isocyanat mehr nachweisen. Die Viskosität des erhaltenen trimethoxysilanterminierten Polymers MSTP 1 betrug 17000 mPa*s.

### A4) Vergleichsversuch zu A3; Synthese trimethoxysilanterminiertes Polymer MSTP 2

Für einen Vergleich wurde die MDI-Prepolymer-Synthese Schritt 1 der Reaktionsfolge A1 unter Verwendung von 0,625 g einer 1%igen DBTL-Lösung in DINCH als Katalysator wiederholt. Die nachfolgenden Schritte wurden analog wie vorher beschrieben durchgeführt. 240 g MDI-Prepolymer mit 0,006 g DBTL wurde unter Stickstoffatmosphäre bei Raumtemperatur mit 37,5 g N-(3-Trimethoxysilyl-propyl)-amino-bernsteinsäure-diethylester unter Rühren versetzt. Die Reaktion war nach 2 h beendet, es ließ sich kein freies Isocyanat mehr nachweisen. Es wurde ein trimethoxysilanterminiertes Polymer MSTP 2 mit der Viskosität 25000 mPa*s erhalten.

### B) Herstellung von triethoxysilanterminierten (ETSP) und trimethoxysilanterminierten Polymeren (MSTP) aus der Reaktion von 3-(Triethoxysilyl)propylisocyanat bzw. 3-(Trimethoxysilyl)propylisocyanat mit PolyU L 12000

### B1) Synthese triethoxysilanterminiertes Polymer ESTP 3: Reaktion von 3-(Triethoxysilyl)propylisocyanat und PolyU L 12000 mit TiPOSS als Katalysator

In einem Reaktionsgefäß wurde unter Stickstoffatmosphäre 250 g PolyU L 12000 vorgelegt und mit 6,25 g einer 20%igen TiPOSS-Lösung in DINCH unter Rühren versetzt. Anschließend wurde innerhalb von 30 min tropfenweise 10,98 g 3-(Triethoxysilyl)propylisocyanat hinzugegeben. Die Reaktion war nach 2 h beendet, es ließ sich kein freies Isocyanat mehr nachweisen. Die Viskosität des erhaltenen triethoxysilanterminierten Polymers betrug 7300 mPa*s. Abschließend wurde 2 % VTEO zugegeben.

### B2) Vergleichsversuch zu B1; Synthese triethoxysilanterminiertes Polymer ESTP 4: Reaktion von 3-(Triethoxysilyl)propylisocyanat und PolyU L 12000 mit DBTL als Katalysator

In einem Reaktionsgefäß wurde unter Stickstoffatmosphäre 250 g PolyU L 12000 vorgelegt und mit 6,25 g einer 20%igen DBTL-Lösung in DINCH unter Rühren versetzt. Anschließend wurde innerhalb von 30 min tropfenweise 10,98 g 3-(Triethoxysilyl)propylisocyanat hinzugegeben. Die Reaktion war nach 2 h beendet, es ließ sich kein freies Isocyanat mehr nachweisen. Die Viskosität des erhaltenen triethoxysilanterminierten Polymers betrug 7700 mPa*s. Abschließend wurde 2 % VTEO zugegeben.

### B3) Synthese Trimethoxysilanterminiertes Polymer MSTP 3: Reaktion von 3-(Trimethoxysilyl)propylisocyanat und PolyU L 12000 mit TiPOSS als Katalysator

In einem Reaktionsgefäß wurde unter Stickstoffatmosphäre 200 g PolyU L 12000 vorgelegt und mit 5 g einer 20%igen DBTL-Lösung in DINCH unter Rühren versetzt. Anschließend wurde innerhalb von 30 min tropfenweise 7,31 g 3-(Trimethoxysilyl)propylisocyanat hinzugegeben. Die Reaktion war nach 2 h beendet, es ließ sich kein freies Isocyanat mehr nachweisen. Die Viskosität des erhaltenen trimethoxysilanterminierten Polymers betrug 8900 mPa*s. Abschließend wurde 2 % VTMO zugegeben.

### B4) Synthese Trimethoxysilanterminiertes Hybridpolymer MSTP 4: Reaktion von 3-(Trimethoxysilyl)propylisocyanat und PolyU L 12000 mit DBTL als Katalysator

In einem Reaktionsgefäß wurde unter Stickstoffatmosphäre 200 g PolyU L 12000 vorgelegt und mit 5 g einer 20%igen DBTL-Lösung in DINCH unter Rühren versetzt. Anschließend wurde innerhalb von 30 min tropfenweise 7,31 g 3-(Trimethoxysilyl)propylisocyanat hinzugegeben. Die Reaktion war nach 2 h beendet, es ließ sich kein freies Isocyanat mehr nachweisen. Die Viskosität des erhaltenen trimethoxysilanterminierten Polymers betrug 9100 mPa*s. Abschließend wurde 2 % VTMO zugegeben.

### C) Prüfung des Aushärteverhaltens der triethoxysilanterminierten Polymere ESTP 1 bis 4 und trimethoxysilanterminierten MSTP 1 bis 4

Die Prüfung des Aushärteverhaltens der silanterminerten Polymere erfolgte durch die Bestimmung der Fadenziehzeit FZ und Klebfreizeit KF an 2 mm starken Proben bei 23°C/50% r. Lf. Die Proben wurden hierfür ohne Katalysator sowie mit TiPOSS, DBTL oder mit einer Kombination aus TiPOSS und DBTL angesetzt und ausgehärtet.

**Tabelle A: Aushärteverhalten triethoxysilanterminierter (ESTP 1 bis 4) und trimethoxysilanterminierter (MSTP 1 bis 4) Polymere unter Verwendung von TiPOSS und DBTL**

| | | **ESTP 1** FZ/KF | **ESTP 2** FZ/KF | **ESTP 3** FZ/KF | **ESTP 4** FZ/KF | **MSTP 1** FZ/KF | **MSTP 2** FZ/KF | **MSTP 3** FZ/KF | **MSTP 4** FZ/KF |
|---|---|---|---|---|---|---|---|---|---|
| | | **1** | **2** | **3** | **4** | **5** | **6** | **7** | **8** |
| **VR 1** | Ohne weitere Kat. Zugabe | 7 Tage keine Rkt. | 7 Tage keine Rkt | >48 h / <72h | >30 h / 48 h | 7 Tage keine Rkt. | 7 Tage keine Rkt | 6 h / 12 h | 1 h / 3,5 h |
| **VR 2** | +0,5 Gew.% TiPOSS | 7 Tage keine Rkt. | 8 h / Keine Durchhärtung | 22 h / <48 h | 6 h / 20 h | 16 h / 44 h | 5 h / Keine Durchhärtung | 40 min / 1,5 h | 15 min / 45 min |
| **VR 3** | +0,5 Gew.% DBTL | 6,5 h / <40h | 42 h / 65 h | 5 h / 16 h | >24 h / 48 h | 1,5 h / 5 h | 2,5 h / 8 h | 15 min / 45 min | 40 min / 2 h |
| **VR 4** | +0,5 Gew.% TiPOSS; +0,5% Gew. DBTL | 5,5 h / < 30 h | 7 h / <30 h | 3 h / 8 h | 6 h / 18 h | 1 h / 4 h | 1,5 h / 5,5 h | 10 min / 40 min | 15 min / 45 min |

| | | | | | | | | | |
|---|---|---|---|---|---|---|---|---|---|
| VR = Versuchsreihe | | | | | | | | | |

Spalten 1, 2, 3 und 4 beschreiben das Aushärteverhalten bei Luftfeuchtigkeit (23°C / 50% r. Lf.) der mit und ohne zusätzlichen Katalysator (TiPOSS, beispielhaft DBTL, einem 1:1 Gemisch aus DBTL / TiPOSS) versetzten triethoxysilanterminierten Polymere (ESTP 1 bis 4). Die triethoxysilanterminierten Polymere wurden über die Umsetzung von MDI-Prepolymer mit N-(3-Triethoxysilyl-propyl)-amino-bernsteinsäure-diethylester (ESTP 1, TiPOSS-katalysiert und ESTP 2, DBTL-katalysiert) sowie über die Reaktion von Triethoxysilylpropylisocyanat mit Polyol (ESTP 3, TiPOSS-katalysiert und ESTP 4, DBTL-katalysiert) erhalten.

Spalten 5, 6, 7 und 8 beschreiben zum Vergleich die Reaktionen der in gleicher Weise hergestellten entsprechenden trimethoxysilanterminierten Polymere (MSTP 1 bis 4).

### D) Fazit:

Aus den Beispielen der Spalten 1 - 8 lässt sich insgesamt ableiten, dass sich die Kombination aus gleichen Teilen TiPOSS und dem beispielhaft verwendeten DBTL (aber auch Bismut-, Zink-, Zinn-, Zirkonium-, Aluminium-, etc. Katalysatoren) besonders vorteilhaft auf die Aushärtung von silanterminierten Polymeren auswirkt. Alle silanterminierten Polymere der Versuchsreihe 4 führen zu ausgehärteten Hybridpolymeren. Besonders überraschend ist hierbei, dass auch die normalerweise reaktionsträgen triethoxysilanterminierten Polymere (ESTP 1 bis 4, Versuchsreihe 4) im Rahmen üblicher Aushärtezeiten (bis zu 40 h) aushärten. Das Aushärteergebnis aus Spalte 3, Versuchsreihe 3 und Spalte 4, Versuchsreihe 2 untermauert dieses Ergebnis, da in diesem Fall ebenfalls ein Katalysatorgemisch aus TiPOSS und DBTL vorliegt. In der Tabelle sind die entsprechenden triethoxysilanterminierten Polymere, die durch das Katalysatorgemisch aus TiPOSS und DBTL besonders beschleunigt aushärten, markiert. Darüber hinaus ist aus Versuchsreihe 1 im Falle der trimethoxysilanterminierten Polymere (Spalte 5 bis 8) ersichtlich, dass die Polymere, die aus der Silylierung unter Verwendung von TiPOSS hergestellt wurden, wesentlich stabiler gegenüber der Aushärtung mit Luftfeuchte sind (Versuchsreihe 1, Spalte 5 und 7). Alle triethoxysilanterminierten Polymere ESTP 1 - 4 (Versuchsreihe 1, Spalte 1 bis 4) sowie die Polymere MSTP 1 und MSTP 2 (Versuchsreihe 1, Spalte 5 und 6) sind ohne zusätzliche Katalyse reaktionsträge und weisen auch nach Tagen keine Aushärtetendenz (Hautbildung) auf.

Als wesentliche Ergebnisse der Aushärteversuche lassen sich zusammenfassen:
1) Die feuchtigkeitsinduzierte Aushärtung von triethoxysilanterminierten Polymeren wird durch die Verwendung einer Katalysatorkombination von TiPOSS und DBTL (Bismut, Zink, Zinn, Zirkonium, Aluminium etc.) stark beschleunigt und genügt damit den Praxisanforderungen.
2) Die Verwendung eines einzelnen Kats (TiPOSS oder DBTL) führt demgegenüber nicht zu einer praxisgerechten Aushärtegeschwindigkeit der triethoxysilanisierten Hybridpolymere.
3) Die Verwendung von TiPOSS als alleiniger Katalysator für die Synthese der silanterminierten Polymere hat den Vorteil, dass diese besonders stabil gegenüber Wassereintrag (Luftfeuchte, Restfeuchte, Formulierungsrohstoffe, etc.) sind.

Um die Praxistauglichkeit eines oben genannten triethoxysilanterminierten Polymers (ESTP 3) unter Beweis zu stellen, wurde dieses in einer beispielhaften Standard-Dicht- und - Klebstoffrezeptur als Polymer verarbeitet. Der erhaltene Kleb- und Dichtstoff wurde hinsichtlich des Aushärteverhaltens (Hautbildungszeit, HBZ) Härte und Dichte untersucht.

**Tabelle B: Zusammensetzung in Gewichtsteilen und Resultate der Auswertung eines beispielhaften Standard-Dichtstoff- und Klebstoffs unter Verwendung des ethoxsilanterminierten-Polymers ESTP 3**

| | **Beispiel 1** |
|---|---|
| ESTP 3 | 25* |
| Kreide | 45 |
| Weichmacher | 20 |
| Titandioxid | 3,35 |
| Wasserfänger | 1,5 |
| Haftvermittler | 1,95 |
| DBTL | 0,2 |
| | |
| | |
| Hautbildungszeit [min] | 22 |
| Härte Shore A | 35 |
| Dichte [g/cm³] | 1,43 |

| | |
|---|---|
| *Enthält 0,13 Gewichtsteile TiPOSS | |

Die mit diesem Material erhaltenen Resultate für die Hautbildungsgeschwindigkeit und Härte liegen im Bereich der Werte, die mit vergleichbaren Industrie Kleb- und Dichtstoffe erzielt werden.

### Beispiel II)

Die vorliegende Erfindung betrifft die Zusammensetzung und das Verfahren zur Herstellung von Polyurethan-Prepolymeren und Polyurethansystemen auf Basis von Polyolen, Di- oder Polyisocyanten sowie eines TiPOSS-basierten Katalysators.

Erfindungsgemäß bevorzugte TiPOSS-basierte Katalysatoren sind diejenigen, die in der EP 2 989 155 B1 und der EP 2 796 493 A1 offenbart sind. Die Offenbarung dieser Dokumente wird hinsichtlich der Katalysatoren vollumfänglich in Bezug genommen. Besonders bevorzugt sind die Katalysatoren (Metallosilsesquioxan) nach Ausführungsform 5 der EP 2 989 155 B1.

Die Untersuchung der Aktivität des Heptaisobutyl POSS-Titanium(IV)-Ethoxid (TiPOSS) für die Bildung von Polyurethanverbindungen wurde im Vergleich zu Dibutylzinndilaurat (DBTDL) und Zinn(II)-2-ethylhexanoat (Zinnoctoat) exemplarisch an verschiedenen ungeschäumten und geschäumten Polyurethansystemen untersucht. Die Auswirkung auf die Herstellung der silylierten Polyurethane (SPUR) auf dem IPDI Weg wurde besonders beachtet. Die Modellrezepturen aus den Anwendungsbereichen CASE, Weichschaum und Flexschaum (Blockschaum) wurden hierbei unter Verwendung verschiedener Polyole und Isocyanate bei gleichem Katalysatorgehalt an TiPOSS und DBTDL bzw. Zinnoctoat hinsichtlich ihres Aushärteverhaltens bei Raumtemperatur (23°C/50 % r. Lf.) untersucht. Die Untersuchungen sind zur Vereinfachung unter der Voraussetzung durchgeführt worden, dass eine vollständige stöchiometrische Umsetzung (Index 100) zwischen Isocyanat und Polyol stattfinden kann. Prinzipiell gelten die Untersuchungen auch für die Herstellung von Prepolymeren. Die katalytische Aktivität der untersuchten Katalysatoren wurde durch die Bestimmung und Vergleich der Startzeit, Fadenziehzeit und Klebfreizeit bestimmt.

### 1.) Untersuchung TiPOSS / DBTDL in ungeschäumten Polyurethanrezepturen

### a) Propylenglykolpolyole

Die Polyol A-Komponente bestand aus einem Polypropylendiol und dem Katalysator TiPOSS, das in Diisononylphthalat (DINP) als 20%ige Lösung vorlag. Zum Vergleich der katalytischen Aktivität wurde eine entsprechende gleiche Polyol-A-Komponente unter Verwendung von DBTDL hergestellt. Die Katalysatormenge betrug jeweils 0,2 Gewichtsprozent (ohne Berücksichtigung der Lösungsmittelmenge). Um den Einfluss des Molekulargewichts zu untersuchen, wurde zusätzlich das Molekulargewicht von gering (MW -2000) bis hoch (MW -18000) variiert, da davon auszugehen ist, dass die Reaktivität der ohnehin reaktionsträgen Polypropylenpolyole mit steigendem Molekulargewicht weiter abnimmt und somit Reaktivitätsunterschiede besonders gut zu beobachten sind. Getestet wurden dementsprechend die Polypropylenpolyole mit MW∼ 2000 (Rokopol D2002, PCC Rokita), MW ∼8000 (Rokopol LDB 8000), MW ∼12000 (Rokopol LDB 12000) und MW ∼18000 (Rokopol LDB 18000).

Als Vernetzerkomponente kamen die Isocyanate P-MDI (Voranate M230, Dow), IPDI (Wanate IPDI, DKSH) und HDI-Trimer-Isocyanurate (Vestanat HT2500/100) zum Einsatz. Die Umsetzung zwischen Polyol-A- und Isocyanat B-Komponente erfolgte durch Verrühren der beiden Komponenten für 10 s bei 1000 U/min mit einem konventionellen Propellerrührer. Nach Beendigung des Rührprozesses wurde die erhaltene Reaktionsmasse in Platten der Dicke ∼ 6mm ausgegossen (10 g). Die Aushärtecharakteristik wurde anhand der Start-, Fadenzieh- und Klebfreizeit bestimmt.

Es wurde gefunden, dass die TiPOSS-katalysierte Polyurethanaushärtung bei Raumtemperatur unter Verwendung der beschriebenen Polypropylenpolyole im Vergleich zu der entsprechenden DBTDL-katalysierten Vernetzung wesentlich beschleunigt wird. Die Reaktionsbeschleunigung liegt je nach untersuchter Polyol- und Isocyanat-Kombination zwischen Faktor 2 und Faktor 100. Insgesamt betrachtet, nimmt der Faktor der Reaktionsbeschleunigung bei Verwendung von TiPOSS besonders überraschend für das verwendete HDI-Trimer Isocyanurat zu und im geringerem Maße für IPDI.

### Fazit für die SPUR-Technologie:

Da die Reaktion zwischen den DMC-Polyolen und IPDI-Isocyanat die entscheidende Reaktion für die kommerzielle Herstellung von SPUR ist (Hybrid-Polymere), kommt dieser Erkenntnis eine große Bedeutung zu. Da wir schon bei Raumtemperatur und 1 : 1 Stöchiometrie eine erhebliche Reaktionssteigerung feststellen können, ist zu erwarten, dass bei den üblichen Bedingungen der SPUR-Prepolymer Herstellung mit erheblich geringeren Katalysatormengen (1/5 bis 1/10) und / oder einer und / oder Temperaturabsenkung (< 80°C) und / oder einer Verkürzung der Reaktionszeit auszugehen ist. Da bei dieser Herstellung die Bildung von Nebenprodukten zu einer unerwünschten Viskositätserhöhung führt, ist somit eine deutliche Verbesserung der Reaktionsführung und Produktqualität zu erwarten.

Im Hinblick auf die immer größer werdende wirtschaftliche Bedeutung der SPUR-Produkte ist mit der Anwendung des TiPOSS-Katalysators sowohl ein Kostenvorteil gegenüber Zinn-Katalysatoren als auch ein Produktvorteil zu erwarten.

### a) Propylenglykolpolyole, Ethylenglykol-getippt

Um zu beurteilen, ob diese Beobachtungen auch auf reaktivere Polyetherpolyole übertragbar sind, wurden exemplarisch Polyetherpolyole mit MW∼ 4000 und f=2 sowie MW ∼4850 und f=3 untersucht, die endständig über "getippte" Ethoxygruppen verfügen. Es wurde gefunden, dass die Reaktivitätsunterschiede der mit TiPOSS und DBTDL katalysierten Polyolsysteme bei Verwendung des reaktiven Polyethertriols geringer ausfallen. Auch hier ist wieder zu beobachten, dass die Reaktivitätsbeschleunigung der Vernetzung durch TIPOSS besonders wirkungsvoll für das HDI-Trimer ist.

### 2.) Untersuchung der Aktivität von TiPOSS / DBTL in Silanterminierten Polyurethanen

Die Bestimmung der Fadenzieh- und Durchhärtegeschwindigkeit an silanterminierten Polyurethanen erfolgte an 6 mm SPUR-Platten, die durch Vermischen der silanterminierten Polyurethane mit jeweils 0,2 Gewichtsprozent TiPOSS und DBTL (jeweils in Lösung, 20%ig in DINP) hergestellt wurden. Die Vermischung erfolgte unter Luftausschluss in einer Argon-Inertgasatmosphäre mit einem konventionellen Propellerrührer. Das vermischte Material wurde bei 23°C/50 % r.Lf. ausgehärtet.

### 3.) Untersuchung der Aktivität von TiPOSS / DBTDL in Polyurethan-Weichschaumrezepturen

Die Polyol A-Komponente bestand aus einem reaktiven, mit Ethoxygruppen getippten Polyethertriol, (Rokopol M 5020, f=3), Wasser und dem Katalysator TiPOSS, das in Diisononylphthalat (DINP) als 20%ige Lösung vorlag. Zum Vergleich der katalytischen Aktivität wurde eine entsprechende gleiche Polyol-A-Komponente unter Verwendung von DBTDL hergestellt. Die Katalysatormenge betrug jeweils 0,2 Gewichtsprozent (ohne Berücksichtigung des Lösungsmittels DINP). Vergleichsweise wurde die Umsetzung unter Verwendung eines weniger reaktionsfreudigen Polypropylenpolyols (Rokopol D 2002, f=2) durchgeführt.

Als Vernetzungskomponente wurde das Isocyanat P-MDI (Voranate M230) eingesetzt. Die Umsetzung zwischen Polyol-A- und Isocyanat-B-Komponente erfolgte durch Verrühren der beiden Komponenten für 10 s bei 2500 U/min mit einem konventionellen Propellerrührer. Die Umsetzung erfolgte stöchiometrisch. Nach Beendigung des Rührprozesses wurde die erhaltene Reaktionsmasse (20 g) in Becher gegossen. Die Aushärtecharakteristik wurde anhand der Start- und Klebfreizeit bestimmt.

Es wurde gefunden, dass die Aktivität des TiPOSS bei Verwendung von ethoxylierten Polyolen vergleichbar zu der des DBTDL ist. Demgegenüber wird der Aushärteprozess bei der Rezeptur, die aus einem reinen Polypropylenpolyol aufgebaut ist, durch TiPOSS stärker beschleunigt.

### 4.) Untersuchung der Aktivität von TiPOSS / Zinnoctoat in einer Polyurethan-Blockschaumrezeptur

Die Polyol A-Komponente bestand aus einem Standardpolyesterpolyol auf Basis Desmophen 2200 B, einem Aminkatalysator (N,N-Dimethylpiperazin und N-N-Dimethylhexadecylamin), Zellstabilisatoren, Wasser und dem Katalysator TiPOSS, welches in DINP als 20%ige Lösung vorlag. Zum Vergleich der katalytischen Aktivität wurde eine entsprechende gleiche Polyol-A-Komponente unter Verwendung von Zinnoctoat hergestellt. Die Katalysatormenge an TiPOSS und Zinnoctoat betrug jeweils 0,03 Gewichtsprozent.

Als Vernetzungskomponenten wurden das Isocyanat Desmodur T65 und ein Prepolymer mit einem NCO-Gehalt von ca. 12 % eingesetzt. Die Umsetzung erfolgte im stöchiometrischen Verhältnis (Index 100). Die Umsetzung zwischen Polyol-A- und den Isocyanat-B-Komponenten erfolgte durch Verrühren der beiden Komponenten für 10 s bei 1000 U/min mit einem Visco Jet-Rührorgan. Nach Beendigung des Rührprozesses wurde die erhaltene Reaktionsmasse (∼ 400 g) in eine 2 L Holzbox gegossen und die Aushärtecharakteristik anhand der Start-und Klebfreizeit bestimmt.

Es wurde gefunden, dass die Aktivität des TiPOSS vergleichbar zu der des Zinnoctoats ist. Die erhaltenen Schäume aus der Umsetzung mit TiPOSS besitzen ein geringeres Raumgewicht, die Festigkeitseigenschaften und die Stauchhärte sind dementsprechend geringer.

### 5.) Gesamtfazit / Anwendungen

### a) Verwendung von TiPOSS bei der Herstellung von SPUR-Prepolymeren

Die beschriebene starke Reaktionssteigerung der Reaktion zwischen den DMC-Polyolen und IPDI kann für die kommerzielle Herstellung von SPUR (Hybrid-Polymere) verwendet werden. Dabei ist vom Einsatz erheblich geringer Katalysatormengen (1/5 bis 1/10) und / oder einer Temperaturabsenkung (< 80°C) und / oder einer Verkürzung der Reaktionszeit auszugehen. Da im Allgemeinen bei dieser Herstellung die Bildung von Nebenprodukten zu einer unerwünschten Viskositätserhöhung führt, ist somit eine deutliche Verbesserung der Reaktionsführung und Produktqualität einschließlich geringerer Produktviskosität (sehr wichtig für den Formulierer) möglich.

### b) Herstellung von KOH-basierten PU-Prepolymeren mit TiPOSS

Der Aufbau von Prepolymeren, die aus der Reaktion von KOH-basierten Polyolen und aliphatischen und aromatischen Isocyanaten erhalten werden, können mit erheblich geringeren Katalysatormengen TiPOSS (1/5 bis 1/10) und / oder einer und / oder Temperaturabsenkung (< 80°C) und / oder einer Verkürzung der Reaktionszeit hergestellt werden. Da bei dieser Herstellung die Bildung von Nebenprodukten zu einer unerwünschten Viskositätserhöhung führt, ist somit von einer deutlichen Verbesserung der Reaktionsführung und Produktqualität auszugehen.

### c) Verwendung von TiPOSS in 2-komponentigen Klarverguss-Systemen und PU-Lacken auf Basis von HDI und anderen aliphatischen Isocyanaten

Durch Einsatz von TiPOSS als Katalysator wird die Aushärtegeschwindigkeit in 2-komponentigen Polyurethan Klarverguss-Systemen und PU-Lacken gesteigert. Durch die Erhöhung des Molekulargewichtes werden die mechanischen Eigenschaften der Lacke und Vergussmassen deutlich verbessert.

### d) TDI-Schäume / Einsatz von TiPOSS bei der Herstellung von Blockschäumen

Bei der Herstellung von TDI-basierten Blockschäumen kann durch Verwendung von TiPOSS als Katalysator auf die Verwendung von gesundheitsbedenklichen Zinnverbindungen - wie bei allen anderen unter 5.) genannten Anwendungen - verzichtet werden. Die Produktqualität nimmt dabei keine Einbußen.

### e) FIPFG (foamed in place foam gaskets) - Dichtungsschäume

Die Herstellung von 2-komponentigen Polyurethansystemen für den FIPFG-Prozess basierend auf einer TiPOSS-katalysierten Aushärtung ist besonders vorteilhaft, da der Aushärteprozess durch die höhere Reaktivität des TiPOSS gegenüber DBTL beschleunigt wird. Die Polyurethanprodukte können darüber hinaus ohne gesundheitsbedenkliche Zinnverbindungen hergestellt werden können, dass besonders für die Herstellung von Dichtungsmaterialien im medizinischen Bereich, Küchenwendungen, etc. wichtig ist.

### f) Verwendung von TiPOSS in feuchtigkeitshärtenden 1-K-Isocyanat-terminierten Prepolymeren

Die Aushärtung von 1-K-Isocyanat-terminierten Prepolymeren kann durch die Verwendung von TiPOSS beschleunigt werden. Auf den Einsatz von gesundheitsbedenklichen Zinnverbindungen kann verzichtet werden. Dies hat eine besondere Relevanz bei Verwendung dieser Prepolymere als Klebstoffe für übliche Fußbodenbeläge, da somit eine mögliche Kontamination, wenn auch nur geringer Mengen Zinn, über die Fußhaut vermieden werden kann.

### 6.) Specific embodiments

Studies on the activity of Heptaisobutyl-POSS-Titanium(IV)-Ethoxide TiPOSS in comparison to DBTL

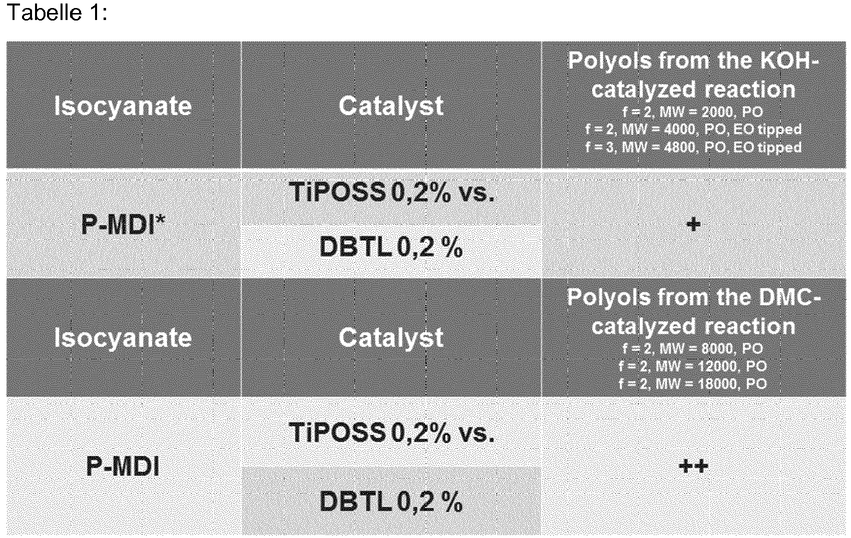

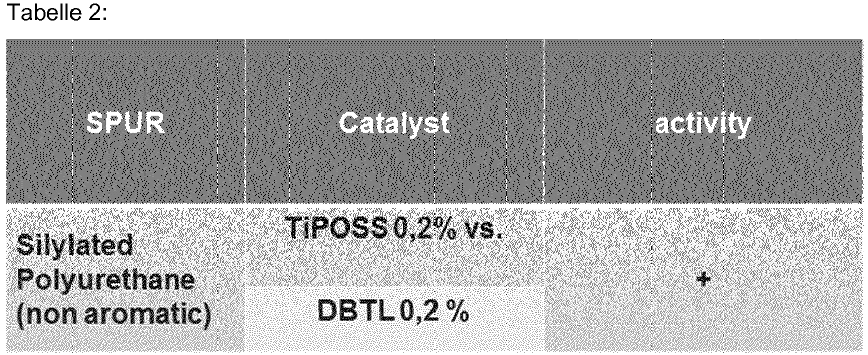

### Abkürzungsverzeichnis:

Coatings, Adhesives, Sealants, Elastomers (CASE)
Diisononylphthalat (DINP)
Dibutylzinndilaurat (DBTDL oder DBTL)
Zinn(II)-2-ethylhexanoat (Zinnoctoat)
silylierten Polyurethane / silylierte Polyurethanharze (SPUR)
Heptaisobutyl POSS-Titanium(IV)-Ethoxid (TiPOSS)
Dimethylcyclosilaxan (DMC)
Polyurethan (PU)
Kaliumhydroxid (KOH)
FIPFG (engl. foamed in place foam gaskets - Dichtungsschäume)
Titan (Ti)
Polyhedral oligomeric silsesquioxane (POSS)

### Ausführungsformen, insbesondere zu den Beispielen II

1. Verfahren zur Herstellung von Prepolymeren durch Umsetzung einer Komponente A mit einer Komponente B in Gegenwart eines Katalysators in einem flüssigen Medium, wobei Komponente A ein Polyol und Komponente B eine quervernetzende Komponente (Quervernetzer) darstellen, dadurch gekennzeichnet, dass die Komponente A gegenüber der Komponente B im Unterschuss vorliegt, insbesondere Komponente A und Komponente B in einem Verhältnis von mindestens 1:1,05, vorzugsweise von 1:2,2 eingesetzt werden, und der Katalysator ausgewählt ist aus der Gruppe der zinnfreien polyedrischen, oligomeren Metallosilsesquinoxanen, vorzugsweise aus der Gruppe der Titan(IV)-Polyoctahedralsilsesquinoxane.
2. Verfahren zur Herstellung von Polyurethanen durch Zusammenbringen eines Zweikomponentensystems mit einer Komponente A und einer Komponente B in Gegenwart eines Katalysators in einem flüssigen Medium, wobei Komponente A ein Polyol und Komponente B eine quervernetzende Komponente (Quervernetzer) darstellen, dadurch gekennzeichnet, dass die Komponenten A und B getrennt vorliegen, und der Katalysator vorzugsweise mit der Komponente A formuliert ist, und die Komponente A und B in einem Verhältnis von 1,2:1,0 bis zu 1,0:1,2 vorliegen.
3. Verfahren zur Herstellung von Polyurethan-Systemen dadurch gekennzeichnet, dass die Prepolymere hergestellt oder herstellbar nach einem der Ausführungsformen 1 oder 2 unter Verwendung eines Katalysators ausgewählt ist aus der Gruppe der zinnfreien polyedrischen, oligomeren Metallosilsesquinoxanen, vorzugsweise aus der Gruppe der Titan(IV)-Polyoctahedralsilsesquinoxane.
4. Verfahren nach Ausführungsform 3, dadurch gekennzeichnet, dass die Prepolymere vor der Umsetzung mit Aminosilanen funktionalisiert werden.
5. Verfahren nach einer der vorherigen Ausführungsformen, dadurch gekennzeichnet, dass Hilfsstoffe zugegeben werden.
6. Verfahren nach Ausführungsform 5, dadurch gekennzeichnet, dass die Hilfsstoffe ausgewählt sind aus der Gruppe bestehend aus Wasser, Zellstabilisatoren, Aminkatalysatoren, Füllstoffen, Haftvermittlern, Feuchtigkeitsfängern, Weichmachern, UV-Stabilisatoren, Tixothropiermitteln, oder Kombinationen daraus bestehen, wobei vorzugsweise ein oder mehrere Additive ein bzw. mehrere Silane sind.
7. Verfahren nach Ausführungsform 6, dadurch gekennzeichnet, dass der Aminkatalysator N,N-Dimethylpiperazin und/oder N,N-Dimethylhexadecylamin oder eine Mischungen daraus sein kann.
8. Verfahren nach einer der vorherigen Ausführungsformen, dadurch gekennzeichnet, dass der Katalysator R¹-POSS-Titanium(IV)-Ethoxid (TiPOSS) ist, wobei R¹ ein Alkyl, Allyl-oder Arylrest ist oder Mischungen daraus, bevorzugt R¹ ein Heptaisobutyl-Rest ist.
9. Verfahren nach einer der vorherigen Ausführungsformen, dadurch gekennzeichnet, dass der Katalysatorgehalt zwischen 0,0001 und 5 Gew.-%, vorzugsweise zwischen 0,001 und 2 Gew.-% liegt, weiter bevorzugt zwischen 0,01 und 0,3 Gew.-% liegt, besonders bevorzugt bei 0,2 liegt, weiter besonders bevorzugt bei 0,03 liegt.
10. Verfahren nach einer der vorherigen Ausführungsform, dadurch gekennzeichnet, dass der Quervernetzer ein Isocyanat ist.
11. Verfahren nach Ausführungsform 10, dadurch gekennzeichnet, dass das Isocyanat aromatisch und/oder aliphatisch ist, bevorzugt Methylendiphenylisocyanate (MDI) und/oder Isophorondiisocyant (IPDI) und/oder ein Hexamethylendiisocyanat-Trimer (HDI-Trimer) oder eine Mischung daraus ist.
12. Verfahren nach einer der vorherigen Ausführungsformen, dadurch gekennzeichnet, dass das Polyol ein Polyoxypropylendiol ist, bevorzugt mit einem Molgewicht zwischen 2000 g/mol und 18000 g /mol ist, besonders bevorzugt mit einem Molgewicht zwischen 12000 g/mol und 18000 g/mol ist.
13. Verfahren nach einer der vorherigen Ausführungsformen 1 bis 11, dadurch gekennzeichnet, dass das Polyol ein ethoxyliertes Polyol ist, bevorzugt ein mit Ethoxygruppen getipptes Polyethertriol ist, besonders bevorzugt eine Molmasse zwischen 2000 g/mol und 4850 g/mol aufweist.
14. Verfahren nach einer der Ausführungsformen 1 bis 11, dadurch gekennzeichnet, dass das Polyol ein Polyesterpolyol ist, bevorzugt Desmophen 2200 B ist.
15. Verfahren nach einer der vorherigen Ausführungsformen, dadurch gekennzeichnet, dass das Polyol einer KOH- und/oder DMC-katalysierten Reaktion entstammt.
16. Verfahren nach einer der vorherigen Ausführungsformen, dadurch gekennzeichnet, dass das flüssige Medium ein organisches Lösungsmittel, bevorzugt Diisonoylphthalat (DINP), ist.
17. Verfahren nach einer der vorherigen Ausführungsformen, dadurch gekennzeichnet, dass es zinnfrei ist.

## Patentansprüche

1. Zusammensetzung enthaltend mindestens ein silyliertes Polymer (SiP) und mindestens zwei Katalysatoren A und B, wobei der Katalysator A aus der Gruppe der Metall-Siloxan-Silanol(-at)-Verbindungen ausgewählt ist.

2. Zusammensetzung nach Anspruch 1, **dadurch gekennzeichnet, dass** der Katalysator A ausgewählt ist aus der Gruppe der Metall-Siloxan-Silanol(-at)-Verbindungen, vorzugsweise, dass der Katalysator A Heptaisobutyl POSS-Titanium(IV)-Ethoxid (TiPOSS) ist, und der Katalysator B ebenfalls ausgewählt ist aus der Gruppe der Metall-Siloxan-Silanol(-at)-Verbindungen.

3. Zusammensetzung nach Anspruch 1 oder 2, **dadurch gekennzeichnet, dass** der Katalysator A Heptaisobutyl POSS-Titanium(IV)-Ethoxid (TiPOSS) und der Katalysator B Heptaisobutyl POSS-Zinn(IV)-Ethoxid (SnPOSS) ist.

4. Zusammensetzung nach Anspruch 1, **dadurch gekennzeichnet, dass** der Katalysator B ausgewählt ist aus einer Gruppe von Katalysatoren, die Metall-Siloxan-Silanol(-at)-Verbindungen nicht umfasst.

5. Zusammensetzung nach Anspruch 4, **dadurch gekennzeichnet, dass** der Katalysator B ausgewählt ist aus der Gruppe von metall-organischen Verbindungen.

6. Zusammensetzung nach einem der Ansprüche 4 bis 5, **dadurch gekennzeichnet, dass** der Katalysator B ausgewählt ist aus der Gruppe bestehend aus Tetraalkyltitanaten, wie Tetramethyltitanat, Tetraethyltitanat, Tetra-n-propyltitanat, Tetra-isopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ((RO)₂TiO₂, worin R z.B. für iso-Propyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminiumtrisbutylat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylmercaptide, Dibutylmercaptide, Dioctylmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodekanoat, Gemische aus Bismut- und Zinkcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen, Amin-Verbindungen wie Butylamin, Octylamin, Dibutylamin, Monoethanolamin, Diethanolamin, Triethanolamin, Diethylentriamin, Oleylamin, Cyclohexylamin, Benzylamin, Diethylaminopropylamin, Xylylendiamin, Triethylendiamin, Guanidin, Diphenylguanidin, 2,4,6,-Tris)dimethylaminomethyl)phenol, Morpholin, N-Methylmorpholin, 2-Ethyl-4-Methylimidazol und 1,8-Diazabicylo(5.4.0)undecen-7 (DBU), Salze dieser Amine mit Carbonsäuren oder anderen Säuren oder Mischungen davon.

7. Zusammensetzung nach Anspruch 6, **dadurch gekennzeichnet, dass** der Katalysator B ausgewählt ist aus der Gruppe bestehend aus Dibutylzinndilaurat (DBTL), Zinn(II)-2-ethylhexanoat (Zinnoctoat), Zink(II)-2-ethylhexanoat, Zink(II)-neodekanoat, Bismut(III)-tris(2-ethylhexonat), Bismut(III)-tris(neodecanoat) oder Mischungen davon.

8. Zusammensetzung nach Anspruch 6 oder 7, **dadurch gekennzeichnet, dass** es sich bei dem Katalysator B um Dibutylzinndilaurat (DBTL) handelt.

9. Zusammensetzung nach einem der Ansprüche 3 bis 7, **dadurch gekennzeichnet, dass** der Katalysator A ausgewählt ist aus der Gruppe bestehend aus Heptaisobutyl POSS-Titanium(IV)-Ethoxid (TiPOSS) und Heptaisobutyl POSS-Zinn(IV)-Ethoxid (SnPOSS) ist, vorzugsweise dass der Katalysator Heptaisobutyl POSS-Titanium(IV)-Ethoxid (TiPOSS) ist.

10. Zusammensetzung nach Anspruch 9, **dadurch gekennzeichnet, dass** darin mehr als ein Katalysator A aus der Gruppe Metall-Siloxan-Silanol(-at)-Verbindungen enthalten ist.

11. Zusammensetzung nach Anspruch 10, **dadurch gekennzeichnet, dass** die Metall-Siloxan-Silanol(-at)-Verbindung die allgemeine Formel R*_{q}SiᵣOₛMₜ aufweist, wobei jeder R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl, -OH und - O-(C1- bis C10-Alkyl), jedes M unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

12. Zusammensetzung nach einem der vorherigen Ansprüche **dadurch gekennzeichnet, dass** die Metall-Siloxan-Silanol(-at)-Verbindung eine allgemeinen Struktur (I) aufweist, 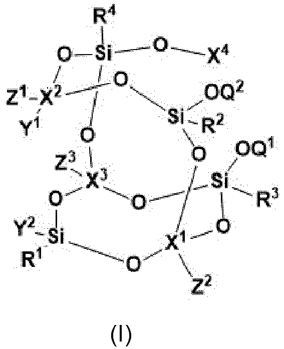 wobei
X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M² ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
X⁴ -M³L¹_{Δ} oder M³ bedeutet und Q¹ und Q² H oder jeweils eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, oder
X⁴ -M³L¹_{Δ} bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,
oder
X⁴, Q¹ und Q² unabhängig voneinander -M³L¹_{Δ} bedeuten,
oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet,
oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

13. Zusammensetzung nach einem der vorherigen Ansprüche **dadurch gekennzeichnet, dass** die Metall-Siloxan-Silanol(-at)-Verbindung die Strukturformel (II) 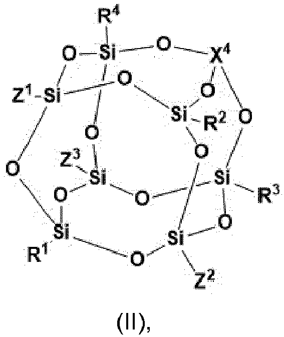 aufweist, wobei X⁴, R¹, R², R³, R⁴, Z¹, Z² und Z³ gemäß Anspruch 4 definiert sind.

14. Zusammensetzung nach Anspruch 13 **dadurch gekennzeichnet, dass** die Metall-Siloxan-Silanol(-at)-Verbindung der Struktur (IV) ein Metall-Silsequioxan ist, 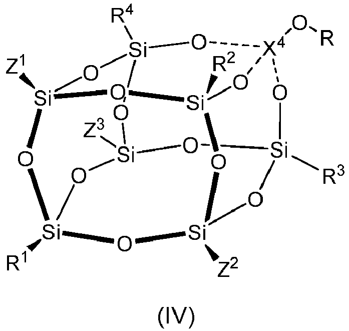 wobei
- X⁴ ausgewählt aus der Gruppe ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti und Sn, ganz besonders bevorzugt Ti ist, und
- X⁴ mit OR verknüpft ist, wobei R ausgewählt ist aus der Gruppe bestehend aus - H, -Methyl, -Ethyl, -Propyl, -Butyl, -Octyl, -Isopropyl, und -Isobutyl, Z¹, Z² und Z³ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und R¹, R², R³ und R⁴ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.

15. Zusammensetzung nach Anspruch 14 **dadurch gekennzeichnet, dass** die Metall-Siloxan-Silanol(-at)-Verbindung ein Metall-Silsequioxan der Struktur (IVb) ist, 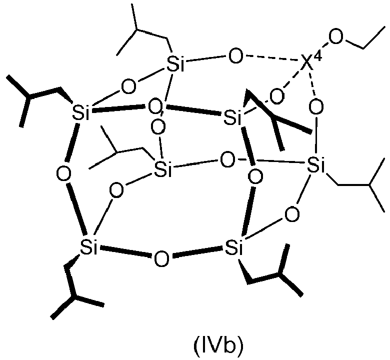 wobei X⁴ ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti (ergo Heptaisobutyl POSS-Titanium(IV)-Ethoxid (TiPOSS) ist) und Sn (ergo Heptaisobutyl POSS-Zinn(IV)-Ethoxid (SnPOSS) ist), ganz besonders bevorzugt Ti (ergo Heptaisobutyl POSS-Titanium(IV)-Ethoxid (TiPOSS)ist) ist.

16. Zusammensetzung nach einem der vorherigen Ansprüche, **dadurch gekennzeichnet, dass** das silylierte Polymer (SiP) erhältlich ist durch eine durch eine Metall-Siloxan-Silanol(-at)-Verbindung katalysierte Synthese von mindestens einer isocyanatreaktiven Verbindung, insbesondere mindestens einem hydroxyfunktionalisierten Polymer (Komponente A) und einer oder mehreren mindestens eine Isocyanat-Gruppe aufweisenden Verbindung (Komponente B).

17. Zusammensetzung nach Anspruch 16, **dadurch gekennzeichnet, dass** die Metall-Siloxan-Silanol(-at)-Verbindung zur katalysierte Synthese der Komponente A und der Komponente B definiert ist nach einem der Ansprüche 11 bis 16, insbesondere, dass es sich dabei um das Heptaisobutyl POSS-Titanium(IV)-Ethoxid (TiPOSS) und/oder Heptaisobutyl POSS-Zinn(IV)-Ethoxid (SnPOSS) handelt, vorzugsweise um das Heptaisobutyl POSS-Titanium(IV)-Ethoxid (TiPOSS).

18. Zusammensetzung nach einem der vorherigen Ansprüche **dadurch gekennzeichnet, dass** das Polymerrückgrat (P) des silylierten Polymers (SiP) Bestandteile aufweist ausgewählt aus der Gruppe bestehend aus Polyurethanen, Polyharnstoffen, Polyethern, Polyestern, Phenolharzen, Polyalkylenen, Poly(meth)acrylaten, Polyamiden, Polycaprolactonen, Polybutadiene oder Polyisoprene sowie Polycarbonaten oder Mischungen davon, bevorzugt aus der Gruppe bestehend aus Polyurethanen, Polyharnstoffen, Poly(meth)acrylaten oder Polyethern oder Mischungen davon, ganz besonders bevorzugt Polyether.

19. Zusammensetzung nach einem der vorherigen Ansprüche **dadurch gekennzeichnet, dass** das silylierte Polymer (SiP) mindestens zwei Endgruppen der allgemeinen Formel (V), 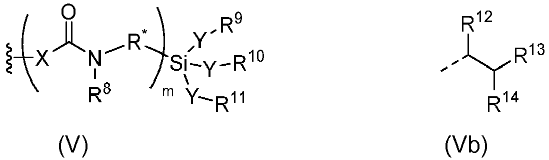 wobei
- X C, Si oder ein Heteroatom ist und diese je nach ihrer Bindigkeit optional ein oder mehrere Reste R⁸ aufweisen, bevorzugt C, N, O, P, S, besonders bevorzugt C, N oder O, ganz besonders bevorzugt N oder O ist und jeweils an ein Kohlenstoff im Polymerrückgrat gebunden ist,
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet,
- R⁸ H, eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine optional substituierte C4- bis C14-Cycloalkylgruppe oder eine optional substituierte C4- bis C14-Arylgruppe bedeutet oder einen Rest der allgemeinen Struktur (Vb) bedeutet,
- R¹² und R¹⁴ jeweils unabhängig voneinander für H oder einen Rest aus der Gruppe bestehend aus -R¹⁵, -COOR¹⁵ und -CN,
- R¹³ für H oder für einen Rest aus der Gruppe bestehend aus -CH₂-COOR¹⁵, - COOR¹⁵, -CONHR¹⁵, -CON(R¹⁵), -CN, -NO₂, -PO(OR¹⁵)₂, -SOR¹⁵ und -SO₂OR¹⁵,
- R¹⁵ für einen gegebenenfalls mindestens ein Heteroatom aufweisenden, Kohlenwasserstoffrest mit 1 bis 20 C-Atomen,
- R⁹, R¹⁰ und R¹¹ unabhängig voneinander H, eine optional substituierte, geradkettige oder verzweigte C1- bis C5-Alkylgruppe, eine optional substituierte, geradkettige oder verzweigte C2- bis C10-Alkenylgruppe oder eine optional substituierte C4- bis C14-Cycloalkylgruppe oder eine optional substituierte C4-bis C14-Arylgruppe bedeutet,
- m 0 oder 1 ist und wenn m = 0 ist, ist das Si-Atom direkt an ein Kohlenstoff im Polymerrückgrat (P) gebunden.

20. Zusammensetzung nach Anspruch 19 **dadurch gekennzeichnet, dass** das silylierte Polymer (SiP) ein Polyether-Polymerrückgrat aufweist mit mindestens zwei Endgruppen der allgemeinen Formel (V), 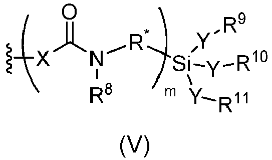 wobei
- X N oder O ist und N optional ein Rest R⁸ aufweist,
- R* 0 oder eine optional substituierte, geradkettige oder verzweigte C1- bis C20-Alkylgruppe oder eine optional substituierte C4- bis C12-Cycloalkylgruppe oder eine optional substituierte C4- bis C12-Arylgruppe, bevorzugt eine optional substituierte, geradkettige oder verzweigte C1- bis C15-Alkylgruppe bedeutet und wenn R* = 0 ist, ist das Si-Atom direkt mit dem N-Atom verbunden,
- Y in Y-R⁹ und Y-R¹⁰ O bedeuten und das Y in Y-R¹¹ entweder O oder eine direkte Bindung des Si-Atoms mit dem jeweiligen Rest R¹¹ bedeutet,
- R⁸ H, eine optional substituierte, geradkettige oder verzweigte C1- bis C10-Alkylgruppe, eine optional substituierte, geradkettige oder verzweigte C2- bis C10-Alkenylgruppe oder eine optional substituierte, geradkettige oder verzweigte C2- bis C10-Alkinylgruppe, eine optional substituierte C4- bis C10-Cycloalkylgruppe oder eine optional substituierte C4- bis C10-Arylgruppe oder ein Bernsteinsäurederivat nach der allgemeinen Struktur (Vb) nach Anspruch 19 bedeutet,
- R⁹, R¹⁰ und R¹¹ unabhängig voneinander H, eine optional substituierte, geradkettige oder verzweigte C1- bis C4-Alkylgruppe, eine optional substituierte, geradkettige oder verzweigte C2- bis C5-Alkenylgruppe oder eine optional substituierte C4- bis C10-Cycloalkylgruppe oder eine optional substituierte C4- bis C10-Arylgruppe bedeutet, bevorzugt unabhängig voneinander H oder eine C1- bis C2-Alkylgruppe ist und
- m 0 oder 1 ist und wenn m = 0 ist, ist das Si-Atom direkt an ein Kohlenstoff im Polymerrückgrat (P) gebunden, bevorzugt m = 1 ist.

21. Zusammensetzung nach Anspruch 20 **dadurch gekennzeichnet, dass** das silylierte Polymer (SiP) ein Polyether-Polymerrückgrat aufweist mit mindestens zwei Endgruppen der allgemeinen Formel (V), 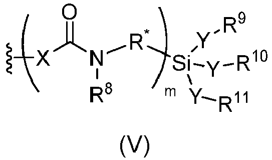 wobei
- R* 0 oder eine optional substituierte, geradkettige oder verzweigte C1- bis C15-Alkylgruppe oder eine optional substituierte C4- bis C6-Cycloalkylgruppe oder eine optional substituierte C4- bis C6-Arylgruppe, bevorzugt eine optional substituierte, geradkettige oder verzweigte C1- bis C10-Alkylgruppe bedeutet, besonders bevorzugt eine C1-Alkylgruppe (= alpha-Silan) oder eine C3-Alkylgruppe (= gamma-Silan) ist und wenn R* = 0 ist, ist das Si-Atom direkt mit dem N-Atom verbunden,
- R⁸ H, eine optional substituierte, geradkettige oder verzweigte C1- bis C8-Alkylgruppe, eine optional substituierte, geradkettige oder verzweigte C2- bis C8-Alkenylgruppe oder eine optional substituierte, geradkettige oder verzweigte C2-bis C8-Alkinylgruppe, eine optional substituierte C4- bis C6-Cycloalkylgruppe oder eine optional substituierte C4- bis C6-Arylgruppe bedeutet,
- R⁹, R¹⁰ und R¹¹ unabhängig voneinander H, eine optional substituierte, geradkettige oder verzweigte C1- bis C4-Alkylgruppe, eine optional substituierte, geradkettige oder verzweigte C2- bis C5-Alkenylgruppe oder eine optional substituierte C4- bis C6-Cycloalkylgruppe oder eine optional substituierte C4- bis C6-Arylgruppe bedeutet, bevorzugt unabhängig voneinander H oder eine C1- bis C2-Alkylgruppe ist und
- m 0 oder 1 ist und wenn m = 0 ist, ist das Si-Atom direkt an ein Kohlenstoff im Polymerrückgrat (P) gebunden, bevorzugt m = 1 ist.

22. Zusammensetzung nach einem der Ansprüche 16 bis 21, **dadurch gekennzeichnet, dass** das hydroxyfunktionalisierte Polymer ausgewählt ist aus der Gruppe bestehend aus Polyoxyalkylendiole oder Polyoxyalkylentriole, insbesondere Polyoxyethylen- und Polyoxypropylendi- und -triole, Polyole höher Funktionalität wie Sorbitol, Petaerythrit gestartete Polyole, Ethylenoxid-terminierte Polyoxypropylenpolyole, Polyesterpolyole, Styrol-Acrylnitril, Acryl-Methacrylat, (Poly)harnstoff gepfropfte oder enthaltende Polyetherpolyole, Polycarbonatpolyole, CO₂-Polyole, Polyhydroxyfunktionelle Fette und Öle, insbesondere Rizinusöl, Polykohlenwasserstoffpolyole wie Dihydroxypolybutadien, Polytetrahydrofuran basierte Polyether (PTMEG), OH-terminierte Prepolymere auf der Basis der Reaktion eines Polyether- oder Polyesterols mit einem Diisocyanat, Polypropylendiole, Polyesterpolyole oder Mischungen daraus, bevorzugt Polypropylendiole, Polyesterpolyole, oder Mischungen daraus.

23. Zusammensetzung nach Anspruch 22 **dadurch gekennzeichnet, dass** das hydroxyfunktionalisierte Polymer ausgewählt ist aus der Gruppe bestehend aus Polyoxyalkylendiole, Polyoxyalkylentriole, insbesondere Polyoxyethylen- und/oder Polyoxypropylendi- und/oder -triole, KOH-katalysierten hydroxyfunktionalisierten Polyethern oder Doppelmetall-Cyanidkomplex-(DMC)-katalysierten hydroxyfunktionalisierten Polyethern oder Mischungen daraus, bevorzugt oder Mischungen daraus.

24. Zusammensetzung nach einem der vorherigen Ansprüche 16 bis 22, **dadurch gekennzeichnet, dass** die Komponente B ausgewählt ist aus der Gruppe bestehend aus aromatischen und/oder aliphatischen Isocyanaten (Iso) der allgemeinen Struktur (VI) oder Mischungen daraus oder Isocyanato-Silanen (Iso-Si) der allgemeinen Struktur (VII) oder Mischungen daraus, 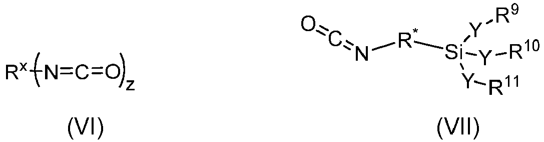 wobei
- R^{x} eine Kohlenstoff-haltige Gruppe bedeutet, bevorzugt mindestens eine aromatische oder aliphatische Gruppe oder Mischungen davon bedeutet, besonders bevorzugt eine optional substituierte, geradkettige oder verzweigte C1- bis C16-Alkylgruppe, eine optional substituierte, geradkettige oder verzweigte C2- bis C16-Alkenylgruppe oder eine optional substituierte, geradkettige oder verzweigte C2- bis C16-Alkinylgruppe, eine optional substituierte C4- bis C14-Cycloalkylgruppe oder eine optional substituierte C4-bis C14-Arylgruppe bedeutet, ganz besonders bevorzugt Diphenylmethan, Toluol, Dicylohexylmethan, Hexan oder Methyl-3,5,5-trimethylcyclohexyl bedeutet,
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet,
- z mindestens 1 ist, bevorzugt mindestens 2 ist,
- R⁹, R¹⁰ und R¹¹ unabhängig voneinander H, eine optional substituierte, geradkettige oder verzweigte C1- bis C5-Alkylgruppe, eine optional substituierte, geradkettige oder verzweigte C2- bis C10-Alkenylgruppe oder eine optional substituierte C4- bis C8-Cycloalkylgruppe oder eine optional substituierte C4- bis C8-Arylgruppe bedeutet und
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden.

25. Zusammensetzung nach einem der Ansprüche 16 bis 24, **dadurch gekennzeichnet, dass** die Komponente B ausgewählt ist aus der Gruppe bestehend aus aromatischen und/oder aliphatischen Isocyanaten (Iso) der allgemeinen Struktur (VI) oder Mischungen daraus oder Isocyanato-Silanen (Iso-Si) der allgemeinen Struktur (VII) oder Mischungen daraus, 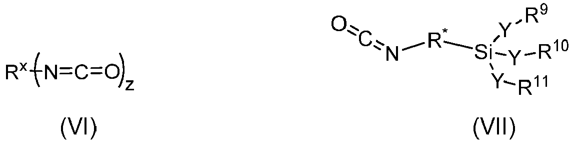 wobei
- R^{x} Diphenylmethan, Toluol, Dicylohexylmethan, Hexan oder Methyl-3,5,5-trimethylcyclohexyl bedeutet, bevorzugt Diphenylmethan oder Hexan oder Methyl-3,5,5-trimethylcyclohexyl bedeutet, ganz besonders bevorzugt Diphenylmethan oder Methyl-3,5,5-trimethylcyclohexyl bedeutet und
- z mindestens 2 ist, bevorzugt 2 ist,
- Y in Y-R⁹ und Y-R¹⁰ O bedeuten und das Y in Y-R¹¹ entweder O oder eine direkte Bindung des Si-Atoms mit dem jeweiligen Rest R¹¹ bedeutet,
- R⁹, R¹⁰ und R¹¹ unabhängig voneinander H, eine optional substituierte, geradkettige oder verzweigte C1- bis C3-Alkylgruppe bedeutet sowie
- R* 0 oder eine optional substituierte, geradkettige oder verzweigte C1- bis C15-Alkylgruppe oder eine optional substituierte C4- bis C6-Cycloalkylgruppe oder eine optional substituierte C4- bis C6-Arylgruppe, bevorzugt eine optional substituierte, geradkettige oder verzweigte C1- bis C10-Alkylgruppe bedeutet, besonders bevorzugt eine C1-Alkylgruppe (= alpha-Silan) oder eine C3-Alkylgruppe (= gamma-Silan) ist und wenn R* = 0 ist, ist das Si-Atom direkt mit dem N-Atom verbunden.

26. Zusammensetzung nach Anspruch 25 **dadurch gekennzeichnet, dass** mindestens ein Isocyanat (Iso) der allgemeinen Struktur (VI) ausgewählt ist aus der Gruppe bestehend aus polymerem, oligomerem oder monomerem Methylendiphenylisocyanat (MDI), insbesondere von 4,4'-Methylendiphenylisocyanat (4,4'-MDI), 2,4'-Methylendiphenylisocyanat (2,4'-MDI), 2,2'-Methylendiphenylisocyanat (2,2'-MDI), 4,4'-Diisocyanatodicyclohexylmethan (H₁₂MDI), 2-Methylpentamethylen-1,5-diisocyanat, 1,12-Dodecamethylendiisocyanat, Lysin-und Lysinesterdiisocyanat, Cyclohexan-1,3-diisocyanat, Cyclohexan-1,4-diisocyanat, Perhydro-2,4'-diphenylmethandiisocyanat, Perhydro-4,4'-diphenylmethandiisocyanat, 1,4-Diisocyanato-2,2,6-trimethylcyclohexan (TMCDI), 3-Isocyanatmethyl-3,5,5-trimethylcyclohexylisocyanat (= Isophorondiisocyanat oder IPDI), 1,6-Hexamethylendiisocyanat (HDI) oder das Trimer daraus (HDI-Trimer), 2,2,4-Trimethyl-1,6-hexamethylendiisocyanat und/oder 2,4,4- 1,4-Bis-(isocyanat)cyclohexan, 1,4-Bis-(isocyanat)benzol (PPDI), 1,3- und/oder 1,4-Bis-(isocyanatomethyl)-cyclohexan, m- und/oder p-Xylylendiisocyanat (m- und/oder p-XDI), m- und/oder p-Tetramethyl-1,3-xylylendiisocyanat, m- und/oder p-Tetramethyl-1,4-xylylendiisocyanat, Bis-(1-lsocyanato-1-methylethyl)-naphthalin, 1,3-Bis(isocyanat-4-methyl-phenyl)-2,4-dioxo-1,3-diazetidin, Naphthalin-1,5-diisocyanat (NDI), 3,3'-Dimethyl-4,4'-diisocyanatodiphenyl (TODI), 2,4- und/oder 2,6-Toluylendiisocyanat (TDI), 1,3-Bis(isocyanatmethyl)benzol oder Mischungen davon, bevorzugt 4,4'-Methylendiphenylisocyanat (4,4'-MDI) oder Isophorondiisocyanat (IPDI), 1,6-Hexamethylendiisocyanat (HDI) oder das Trimer daraus (HDI-Trimer) oder Mischungen davon, ganz besonders bevorzugt 4,4'-Methylendiphenylisocyanat (4,4'-MDI) oder Isophorondiisocyanat (IPDI) oder Mischungen davon.

27. Zusammensetzung nach Anspruch 26 **dadurch gekennzeichnet, dass** mindestens ein Isocyanato-Silan (Iso-Si) der allgemeinen Struktur (VII) ausgewählt ist oder Mischungen davon, 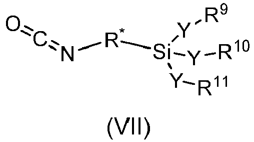 wobei R⁹, R¹⁰, R¹¹ und R* nach Anspruch 24 oder 25 definiert sind, bevorzugt R⁹, R¹⁰, R¹¹ eine Methyl- oder Ethylgruppe oder Mischungen davon sind, bevorzugt ausgewählt ist aus der Gruppe bestehend aus 3-(Triethoxysilyl)methylisocyanat, 3-(Trimethoxysilyl) methylisocyanat, 3-(Triethoxysilyl)ethylisocyanat, 3-(Trimethoxysilyl)ethylisocyanat 3-(Triethoxysilyl)propylisocyanat, 3-(Trimethoxysilyl)propylisocyanat, 3-(Triethoxysilyl) butylisocyanat, 3-(Trimethoxysilyl)butylisocyanat, 3-(Triethoxysilyl)pentylisocyanat 3-(Trimethoxysilyl)pentylisocyanat, 3-(Triethoxysilyl)hexylisocyanat, 3-(Trimethoxysilyl)hexylisocyanat oder Mischungen davon, bevorzugt 3-(Trimethoxysilyl)methylisocyanat, 3-(Triethoxysilyl)methylisocyanat, 3-(Trimethoxysilyl)propylisocyanat, 3-(Triethoxysilyl)propylisocyanat oder Mischungen davon, besonders bevorzugt 3-(Trimethoxysilyl)propylisocyanat, 3-(Triethoxysilyl)propylisocyanat, oder Mischungen davon.

28. Zusammensetzung nach einem der vorherigen Ansprüche **dadurch gekennzeichnet, dass** das silyliertes Polymer (SiP) durch Umsetzung mit einem Aminosilan (AmSi) hergestellt ist.

29. Zusammensetzung nach Anspruch 28, **dadurch gekennzeichnet, dass** mindestens ein Aminosilan (AmSi) der allgemeinen Struktur (VIII) ausgewählt ist oder eine Mischung davon ist, 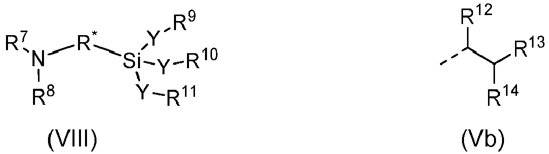 wobei
- R⁷ H ist,
- R⁸ H, eine optional substituierte, geradkettige oder verzweigte C1- bis C25-Alkylgruppe, eine optional substituierte, geradkettige oder verzweigte C2- bis C25-Alkenylgruppe oder eine optional substituierte C4- bis C18-Cycloalkylgruppe oder eine optional substituierte C4- bis C18-Arylgruppe oder einen Rest der allgemeinen Struktur (Vb) bedeutet,
- R* 0 oder eine optional substituierte, geradkettige oder verzweigte C1- bis C25-Alkylgruppe oder eine optional substituierte C4- bis C18-Cycloalkylgruppe oder eine optional substituierte C4- bis C18-Arylgruppe bedeutet und wenn R* = 0 ist, ist das Si-Atom direkt mit dem N-Atom verbunden,
- R¹² und R¹⁴ jeweils unabhängig voneinander für H oder einen Rest aus der Gruppe bestehend aus -R¹⁵, -COOR¹⁵ und -CN,
- R¹³ für H oder für einen Rest aus der Gruppe bestehend aus -CH₂-COOR¹⁵, -COOR¹⁵, -CONHR¹⁵, -CON(R¹⁵), -CN, -NO₂, -PO(OR¹⁵)₂, -SOR¹⁵ und -SO₂OR¹⁵,
- R¹⁵ für einen gegebenenfalls mindestens ein Heteroatom aufweisenden, Kohlenwasserstoffrest mit 1 bis 20 C-Atomen,
- R⁹, R¹⁰, R¹¹ und R* nach Anspruch 19 oder 20 definiert sind und
- jedes Y unabhängig voneinander entweder O oder eine direkte Bindung des Si-Atoms mit dem jeweiligen Rest R⁹, R¹⁰ oder R¹¹ bedeutet, bevorzugt mindestens ein Y O bedeutet.

30. Zusammensetzung nach einem der vorherigen Ansprüche 28 oder 29, **dadurch gekennzeichnet, dass** das Aminosilan (AmSi) der allgemeinen Struktur (VIII) ausgewählt aus der Gruppe aus N-[3-(Trimethoxysilyl)methyl]butylamin, N-[3-(Triethoxysilyl)methyl]butylamin, N-[3-(Trimethoxysilyl)ethyl]butylamin, N-[3-(Triethoxysilyl)ethyl]butylamin, N-[3-(Trimethoxysilyl)propyl]butylamin, N-[3-(Triethoxysilyl)propyl]butylamin, N-[3-(Trimethoxysilyl)butyl]butylamin, N-[3-(Triethoxysilyl)buyl]butylamin, N-[3-(Trimethoxysilyl)pentyl]butylamin, N-[3-(Triethoxysilyl)pentyll]butylamin, N-[3-(Trimethoxysilyl)hexyl]butylamin, N-[3-(Triethoxysilyl)hexyl]butylamin, 3-Aminopropyltrimethoxysilan, 3-Aminopropyltriethoxysilan, N-Cyclohexyl-3-aminopropyltrimethoxysilan, N-Cyclohexyl-3-aminopropyltriethoxysilan, N-(3-Trimethoxysilyl-propyl)-amino-bernsteinsäurediethylester, N-(3-Triethoxysilyl-propyl)-amino-bernsteinsäure-diethylester oder eine Mischung davon ist, bevorzugt N-[3-(Trimethoxysilyl)methyl]butylamin, N-[3-(Triethoxysilyl)methyl]butylamin, N-[3-(Trimethoxysilyl)propyl]butylamin, N-[3-(Triethoxysilyl)propyl]butylamin, N-(3-Trimethoxysilyl-propyl)-amino-bernsteinsäurediethylester, N-(3-Triethoxysilyl-propyl)-amino-bernsteinsäure-diethylester, besonders bevorzugt N-[3-(Trimethoxysilyl)propyl]butylamin, N-[3-(Triethoxysilyl)propyl]butylamin, N-[3-(Trimethoxysilyl)methyl]butylamin, N-[3-(Triethoxysilyl)methyl]butylamin, N-(3-Triethoxysilyl-propyl)-amino-bernsteinsäure-diethylester, N-(3-Trimethoxysilyl-propyl)-amino-bernsteinsäure-diethylester oder eine Mischung davon, ganz besonders bevorzugt N-(3-Triethoxysilyl-propyl)-amino-bernsteinsäure-diethylester, N-[3-(Triethoxysilyl)propyl]butylamin, N-[3-(Triethoxysilyl)methyl]butylamin oder eine Mischung davon.

31. Silyliertes Polymer definiert nach einem der vorherigen Ansprüche.
